(19) **Europäisches Patentamt**
**European Patent Office**
**Office européen des brevets**

(11) **EP 1 414 610 B1**

(12) **EUROPÄISCHE PATENTSCHRIFT**

(45) Veröffentlichungstag und Bekanntmachung des Hinweises auf die Patenterteilung:
**19.03.2008 Patentblatt 2008/12**

(21) Anmeldenummer: **02760241.6**

(22) Anmeldetag: **12.07.2002**

(51) Int Cl.:
***B23K 11/31*** *(2006.01)* ***B23K 11/25*** *(2006.01)*

(86) Internationale Anmeldenummer:
**PCT/EP2002/007776**

(87) Internationale Veröffentlichungsnummer:
**WO 2003/008146 (30.01.2003 Gazette 2003/05)**

(54) **WIDERSTANDSSCHWEISSEINRICHTUNG UND STEUERVERFAHREN**

RESISTANCE WELDING DEVICE AND CONTROL METHOD

UNITE DE SOUDAGE PAR RESISTANCE ET PROCEDE DE COMMANDE CORRESPONDANT

(84) Benannte Vertragsstaaten:
**DE**

(30) Priorität: **12.07.2001 DE 10133297**

(43) Veröffentlichungstag der Anmeldung:
**06.05.2004 Patentblatt 2004/19**

(73) Patentinhaber: **KUKA Systems GmbH**
**86165 Augsburg (DE)**

(72) Erfinder:
• **DIETRICH, Simon**
**86169 Augsburg (DE)**

• **RIPPL, Peter**
**86163 Augsburg (DE)**

(74) Vertreter: **Ernicke, Klaus Stefan**
**Schwibbogenplatz 2b**
**86153 Augsburg (DE)**

(56) Entgegenhaltungen:
EP-A- 0 644 014     EP-A- 1 005 943
EP-A- 1 118 417     DE-A- 3 136 726
DE-A- 3 504 159     DE-A- 3 728 329
DE-A- 4 214 412     JP-A- 9 024 476

**Beschreibung**

Die Erfindung betrifft eine elektrische Widerstandsschweißeinrichtung, vorzugsweise eine elektrische Punktschweißeinrichtung, und ein Verfahren zu deren Steuerung, insbesondere Anpassung für die Relativposition von Schweißzange und Werkstück, mit den Merkmalen in den Oberbegriffen des Verfahrens- und den Vorrichtungshauptansprüchen.

Widerstandsschweißvorrichtungen sind aus der Praxis bekannt. Die Widerstandsschweißeinrichtung ist stationär angeordnet oder wird von einem Roboter oder einem anderen Manipulator bewegt. Sie besitzt eine Schweißzange mit in der Regel zwei Elektrodenarmen, von denen einer relativ ortsfest und der andere relativ beweglich angeordnet ist und mittels eines Armantriebs nebst einer Steuerung bewegt wird. An den Enden der Elektrodenarme sitzen geeignete Elektroden mit austaüschbaren Elektrodenkappen. Der Armantrieb ist kraft- oder momentengesteuert. Beim automatisierten Widerstandsschweißen mit Industrierobotern kann man drei kinematische Varianten unterscheiden. In der einen wird die Schweißzange vom Roboter geführt, wobei das Werkstück fest auf einer Auflage positioniert ist. In der zweiten Variante ist die kinematische Zuordnung umgedreht, wobei die Schweißzange ortsfest positioniert ist und das Werkstück vom Roboter geführt wird. In der dritten Variante werden die Schweißzange und das Werkstück von je einem Roboter geführt. Bei allen drei Varianten mit Roboterführung besteht das Problem der exakten Relativpositionierung zwischen Schweißzange und Werkstück. Um zum Beispiel bei der ersten Variante die Schweißzange auf den zu verschweißenden Punkt am Werkstück zu positionieren, muss die Schweißzange geöffnet sein. Um hierbei eine Kollision mit dem Werkstück zu vermeiden, muss die Schweißzange so positioniert werden, dass die Spitze der am feststehenden Arm montierten Elektrode einen Mindestabstand zum Werkstück hat. Dieser Raumpunkt wird im Bewegungsprogramm des Roboters programmiert (geteacht) und vom Roboter angefahren. Der Mindestabstand muss aus verschiedenen Gründen vorhanden sein, zum Beispiel wegen Toleranzen der Position des Werkstücks, bedingt durch Chargentoleranzen der Bleche und durch Toleranzen der Spannvorrichtung oder wegen Längenunterschieden der Elektroden, bedingt zum Beispiel durch Verschleiß oder Kappenfräsen.

Beim Schweißen muss die am feststehenden Arm der Schweißzange montierte Elektrode eine Seite des Werkstücks berühren und die am beweglichen Arm montierte Elektrode die andere Seite. Dabei muss die Schweißzange geschlossen werden, während der Roboter steht. Ohne zusätzliche Ausgleichsmaßnahmen würden beim Schließen der Schweißzange Deformationen auftreten, um die feststehende und vom Werkstück aus Sicherheitsgründen beabstandete Elektrode in Kontakt mit dem Werkstück zu bringen. Diese Deformationen können sich am Werkstück durch eine Biegung der zu verschweißenden Bleche, aber auch an der Spannvorrichtung und in der Kinematik des Roboters äußern, wobei die betroffenen Roboterteile, zum Beispiel Getriebe, Zahnriemen etc. überlastet werden könnten. Hieraus können sich weitere Nachteile ergeben, zum Beispiel die Maß- und Formhaltigkeit des Werkstücks verschlechternde bleibende Deformationen. Ferner kann sich eine schlechte Schweißqualität bedingt durch asymetrische Elektrodenkraft ergeben. Weitere ungünstige Faktoren wären ein übermäßiger Verschleiß der Spannvorrichtung und des Roboters.

Um diese Nachteile zu vermeiden, werden üblicherweise beim automatisierten Widerstandsschweißen Ausgleichsvorrichtungen und sogenannte Zangenausgleichssysteme eingesetzt. Diese gibt es in verschiedenen Varianten, zum Beispiel als mechanische, pneumatische, hydraulische und elektromotorische Systeme. Je nach Antriebsart enthalten die verschiedenen Zangenausgleichssysteme relativ aufwendige Komponenten und Steuerungen. Die Hauptaufgabe eines Zangenausgleichssystems ist die Trennung der starren, mechanischen Verbindung zwischen dem Handflansch des Roboters und der Schweißzange für die Zeit Abschließen der Schweißzange bis erneuter, Zangenöffnung. Außerhalb dieser Zeit muss die Schweißzange mit dem Roboter wieder starr gekoppelt sein. Die mechanische Entkopplung der Schweißzange vom Roboter unterbricht den Kraftfluss von der Zange zum Roboter. Vereinfacht gesagt ist bei aktiviertem Zangenausgleich die Schweißzange mit dem Roboter kinematisch nur noch über ein Gelenk verbunden. Um zu verhindern, dass sich bei dieser Gelenkfunktion das Gewicht der Schweißzange auf das Werkstück abstützt und dadurch eine asymetrische Elektrodenkraft bewirkt, muss das Zangenausgleichsystem zusätzlich einen Gewichtsausgleich der Schweißzange bewirken. Um jedoch einen optimalen Gewichtsausgleich zu gewährleisten, muss dem Zangenausgleichssystem die Position der Schweißzange bekannt sein. Außerdem muss der Gewichtsausgleich für die verschiedenen Orientierungen und Positionen der Schweißzange passend justiert sein.

Die Zangenausgleichssysteme haben in der Praxis gewichtige Nachteile. Sie erhöhen die Investitionskosten durch mehr oder weniger aufwändige Technik, steigern das Gewicht der Schweißzangen, erfordern eine aufwändige und positionsbezogene Justage des Gewichtsausgleichs nebst zyklischer Kontrolle und ggf. Korrektur dieser Justage. Zudem sind intensive Wartungen notwendig. Die Synchronisation des Zangenantriebs muss mit dem Ausgleichsantrieb synchronisiert werden. Zudem werden meist Längenunterschiede der Elektroden nicht berücksichtigt. Die Elektroden können ferner beim Schweißen eine unerwünschte Schiefstellung am Werkstück durch den Zangenausgleich einnehmen.

Die EP 1 005 943 A2 befasst sich mit der Überwachung und eventuellen späteren Korrektur der vom Roboter anzusteuernden Relativposition zwischen den Elektroden der Schweißzange und dem Werkstück. Hierbei werden während des normalen Schweißprozesses die beim Schließen der Schweißzange auftretenden Kontaktpositionen der Elektroden beim Erreichen der Bleche ermittelt und mit Positions-Sollwerten in der Robotersteuerung verglichen. Der Schließvorgang der Zange wird fortgesetzt bis zum Erreichen der Endstellung und Schweißposition, in der wiederum Positionsendwerte ermittelt und mit gespeicherten Positions-Sollwerten verglichen werden. Diese gespeicherten Positions-Sollwerte werden nach dem Schweißen in der Robotersteuerung auf die ermittelten Positionsendwerte korrigiert. Diese Korrektur ist eine reine Sollwert-Korrektur und führt nicht zu einer Veränderung der Roboter- und Zangenposition während des laufenden Schweißvorganges, sondern wirkt sich als Sollwert-Korrektur erst beim nächsten Schweißvorgang aus. Wenn eine Differenz zwischen Soll- und Ist-Werten der Elektrodenpositionen besteht, wird trotz dieser Fehlposition der Schweißzange der laufende Schweißvorgang durchgeführt und kann somit fehlerhaft sein. Ziel der Schrift ist es, beim Schweißen evtl. Verwerfungen oder Freiräume zwischen den Blechen festzustellen, flachzudrücken und dann noch die korrekte Schweißkraft aufzubringen. Für die Einebnung der Verwerfungen muss nämlich zunächst einmal eine Federkraft und nachfolgend noch die richtige Presskraft zum Schweißen aufgebracht werden.

Es ist Aufgabe der vorliegenden Erfindung, eine bessere Widerstandsschweißeinrichtung nebst Verfahren zu deren Steuerung und insbesondere Anpassung aufzuzeigen.

Die Erfindung löst diese Aufgabe mit den Merkmalen im Verfahrens- und Vorrichtungshauptanspruch. Durch das kostengünstige Anpassverfahren und die Anpassvorrichtung kann auf kostspielige, bau-, platz- und steueraufwändige Zangenausgleichssysteme verzichtet werden. Die erforderliche schweißgerechte Relativposition von Schweißzange und Werkstück lässt sich schneller und genauer als mit einem Zangenausgleichssystem vom Roboter sensorgestützt über einen detektierten Werkstückkontakt oder Abstand suchen und anfahren. An jedem Schweißpunkt ist eine eigene und vollautomatische Positionsanpassung durchführbar. Zudem können die bisherigen Fehlereinflüsse durch unterschiedliche Orientierungen sowie Positionen der Schweißzange und entsprechend unterschiedliche. Gewichtseinflüsse automatisch und exakt kompensiert werden. Gleiches gilt für die beim Stand der Technik bisher nicht erfassten Änderungen bei Form und Größe der Elektroden und deren Einfluss auf die Schweißung. Bei Entfall des Zangenausgleichssystems kann die Schweißzange mechanisch starr mit dem Handflansch des Roboters verbunden werden, wobei der feststehende Elektrodenarm und die dazu gehörige Elektrode fest relativ zum Handflansch sind. Für die konstruktive Gestaltung und die Funktion der Anpassvorrichtung gibt es verschiedene Möglichkeiten. Hierbei ist auch eine Umrüstung oder Nachrüstung vorhandener Schweißzangen möglich.

Das Anpassverfahren und die Anpassvorrichtung können außerdem mit Vorteil für weitere Zwecke eingesetzt werden. Zum einen lassen sich die Werkstücke in ihrer Position und ihren Abmessungen sowie ihrer Geometrie exakt und automatisch vermessen, wobei die Messdaten dokumentiert, gespeichert und auf unterschiedliche Weise ausgewertet werden können. Der Roboter mit dem geführten Teil, vorzugsweise der Schweißzange, wird somit während der Produktion online zur Messmaschine umfunktioniert. Hierdurch lassen sich gezielt und nachweisbar die Schweißqualität und die Bauteilgüte optimieren.

Bei der erfindungsgemäßen Anpasstechnik kann zusätzlich zur Schweißzange bzw. zu deren Armantrieb auch die Positioniervorrichtung, z.B. ein Roboter, in seinen Zustellbewegungen kalibriert werden. Die Anpassungsschritte unter Verschleißaufnahme der Elektroden und nach der Position bzw. den Abmessungen eines Werkstückes lassen sich vorteilhaft in Verbindung mit beliebigen Armantrieben einsetzen.

Eine Positionssteuerung des Armantriebs hat den Vorteil, dass die Widerstandsschweißeinrichtung besser und genauer gesteuert werden kann. Insbesondere können die Federelastizitäten der Schweißzange zwischen Armantrieb und Elektroden kompensiert werden. Hierdurch lässt sich auch eine ganz bestimmte gewünschte Elektrodenkraft genau einstellen.

Die Positionssteuerung ermöglicht eine schnelle und genaue Elektrodenkraftsteuerung, wobei auch Kraftprofile gefahren werden können. Insbesondere kann die Elektrodenkraft während des Prozesses auch reduziert werden. Die Positionssteuerung eignet sich für beliebige Arten von Armantrieben, wobei besondere Vorteile für einen elektromotorischen Antrieb bestehen. Die Positionssteuerung kompensiert ferner automatisch und schnell die Streuung der mechanischen Eigenschaften des Zangensystems, das heißt geometrische Toleranzen, mechanische Reibung, mechanisches Spiel und dergleichen. Ferner werden die durch Temperatureinfluss verursachten Änderungen der mechanischen Eigenschaften des Zangensystems automatisch und schnell kompensiert. Gleiches gilt für Änderungen, die durch Alterung und/oder Verschleiß verursacht sind. Auch normale Zustandsänderungen, wie z.B. Längenänderungen der Elektrodenkappen durch Abnutzung bzw. Verschleiß oder in Folge eines Abfräsens werden berücksichtigt.

Die Positionssteuerung für die Schweißzange kann bei beliebigen Arten von solchen Geräten oder Zangensystemen eingesetzt werden, wobei diese auch beliebig stationär oder beweglich angeordnet sein können. Besondere Vorteile bestehen bei einer robotergeführten Widerstandsschweißeinrichtung. Hierbei ist es außerdem günstig, wenn auf die Robotersteuerung zurückgegriffen werden kann, in dem die Positionssteuerung mit dieser Robotersteuerung verbunden oder sogar in diese integriert ist. Dies erlaubt ein sehr schnelles Messen der aktuellen Antriebs- oder Motorposition und eine schnelle und direkte Berechnung der Daten und deren Umsetzung in Steuer- und Bewegungsbefehle.

Mit dem Kalibrierverfahren nebst Kalibriervorrichtung können zum einen die Schweißzange bzw. deren Armantrieb nach einer gewünschten Elektrodenkraft kalibriert werden. Bei einer über Kraftmesser an den Zangenarmen direkt kraftgesteuerten oder kraftgeregelten Schweißzange können die Kraftmesser auf die tatsächlich wirkende Elektrodenkraft kalibriert und geeicht werden. Bei einer positionsgesteuerten oder positionsgeregelten Schweißzange entsprechen im Schweißbetrieb die eingestellten Positionen des Armantriebs durch die Kalibrierung exakt der gewünschten Elektrodenkraft. Für die Kalibrierung eignet sich besonders ein stationärer oder bewegter Kraftsensors, auf den die bewegte oder stationäre Schweißzange geschlossen wird.

Im weiteren kann auch eine Kalibrierung nach dem Verschleiß der Elektroden vorgenommen werden, wobei Elektrodenabbrand und andere Verkürzungen der Elektroden aufgenommen und bei der Positionssteuerung im Schweißbetrieb berücksichtigt werden.

In den Unteransprüchen sind vorteilhafte Ausgestaltungen der Erfindung angegeben.

Die Erfindung ist in den Zeichnungen beispielsweise und schematisch dargestellt. Im einzelnen zeigen:

Figur 1:          eine Schweißstation mit mehreren Widerstandsschweißeinrichtungen und Robotern sowie Kalibriereinrichtungen in perspektivischer Ansicht,

Figur 2:          eine Widerstandsschweißeinrichtung mit Roboter, Werkstück und Serviceeinrichtung mit Kalibriereinrichtung in Seitenansicht,

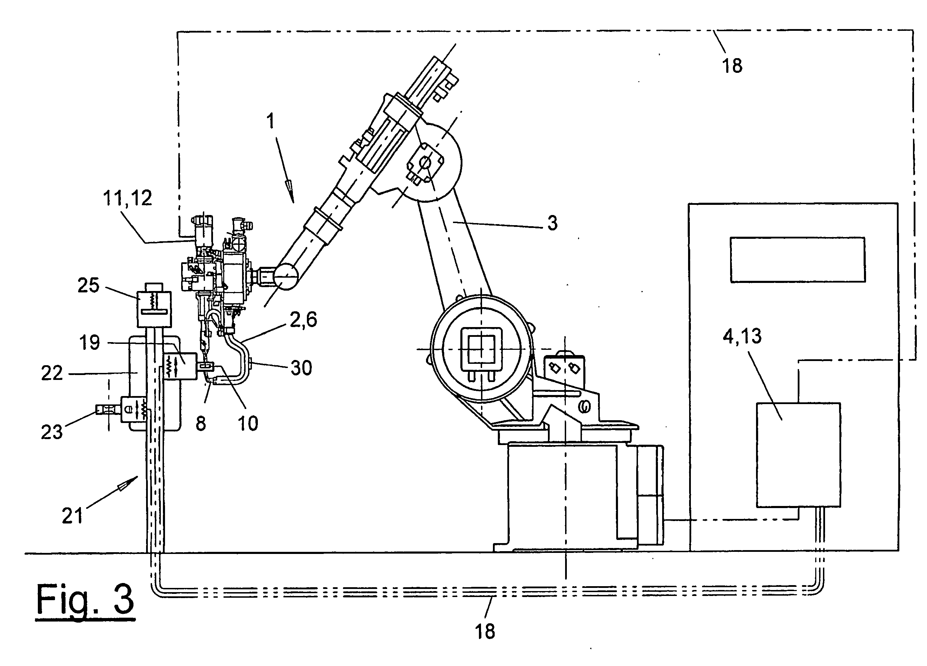

Figur 3:          die Anordnung von Figur 2 mit dem Roboter in Kalibrierstellung,

Figur 4:          eine Seitenansicht einer C-Schweißzange mit einem festen und einem beweglichen Zangenarm,

Figur 5:          eine X-Schweißzange in Seitenansicht,

Figur 6:          eine Schemadarstellung der Zangenkalibrierung mit einem Sensor,

Figur 7:          eine Darstellung der Elektrodenlage an einem Werkstück,

Figur 8 bis 12:    Diagramme zu den einzelnen Schritten bei der Zangenkalibrierung,

Figur 13 und 14:   eine Elektrodenzange in berührender Anpassposition an zwei verschiedenen Werkstücken,

Figur 15:         eine Variante mit Abstandsmessung und

Figur 16:         eine schematische Darstellung einer Schaltung zur Zangenanpassung mit Kontaktsensorik.

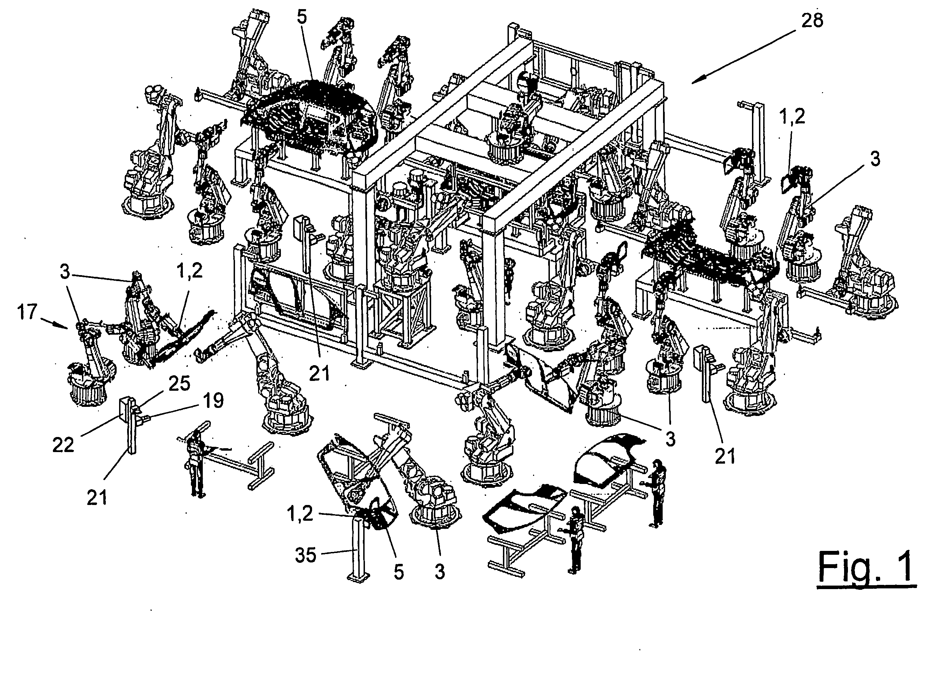

Figur 1 zeigt eine Bearbeitungsstation (28) für Werkstücke (5), die in diesem Fall als Rohkarosserien von Kraftfahrzeugen ausgebildet sind. Die Bearbeitung der Karosserien erfolgt unter anderem durch elektrisches Widerstandspunktschweißen mittels mehrerer Widerstandsschweißeinrichtungen (1). Hierbei kommen mehrere Schweißroboter (3) zum Einsatz, die an ihrer Roboterhand Schweißzangen (2) der nachstehend näher beschriebenen Art tragen. Außerdem können ein oder mehrere stationäre Widerstandsschweißeinrichtungen (1) mit stationären Schweißzangen (2) vorhanden sein, wobei das Werkstück (5) relativ zur Schweißzange (2) von einem Roboter (3) bewegt wird. Derartige stationäre Schweißzangen werden bisweilen auch als Schweißklemmen bezeichnet. In Figur 1 zeigt diese Anordnung im unteren mittleren Bildbereich. In vorzugsweise allen Fällen findet eine robotergeführte Relativbewegung zwischen Werkstück (5) und Schweißzange (2) statt.

Die Schweißzangen (2) sind mit mehreren, üblicherweise zwei relativ zueinander beweglichen Zangenarmen (6, 7) ausgerüstet, die an den Enden jeweils eine Elektrode (8) tragen und von einem Armantrieb (11) bewegt werden. Die Elektroden (8) können austauschbare Elektrodenkappen (9) besitzen.

Bei derartigen Schweißzangen (2) ist eine optimale elektrische Widerstandpunktschweißung nur dann erzielbar, wenn die Elektroden (8) von beiden Seiten zum richtigen Zeitpunkt, an der richtigen Stelle und mit der richtigen Kraft auf das Werkstück (5) einwirken, welches üblicherweise zwei oder mehr aufeinander liegende Blechlagen (14,15) besitzt. Die Blechlagen (14,15) werden zwischen den Elektroden (8) unter Einwirkung der sogenannten Elektrodenkraft zusammengepresst, wobei es vor allem darauf ankommt, dass an der Kontaktstelle zwischen den Blechen (14,15) die korrekte Elektrodenkraft wirkt, weil hier das Material durch die Erwärmung des Schweißstromes schmelzen und eine Schweißlinse bilden soll.

Aus diesen Erfordernissen ergeben sich für eine Schweißzange (2) zwei Grundprobleme, nämlich einerseits der richtige Positionierhub und andererseits der korrekte. Schließhub. Beim Positionierhub muss die korrekte Relativposition zwischen der geöffneten Schweißzange (2) und dem Werkstück (5) gefunden werden, wobei im anschließenden Schließhub die Zangenarme (6, 7) und die Elektroden (8) in die korrekte Kontakt- und Krafteinwirkungsposition zum Werkstück (5) gebracht werden müssen. Beim Positionierhub werden entweder die Schweißzange (2) oder das Werkstück (5) oder auch beide durch einen Roboter (3) geführt. Zur Erzielung einer korrekten Schweißung sieht die Erfindung das nachfolgend näher beschriebene Kalibrierverfahren nebst Kalibriervorrichtung (19) für den Schließhub und ein Anpassverfahren nebst Anpassvorrichtung (17) für den Positionierhub vor.

In der Bearbeitungsstation oder Schweißstation (28) können ein oder mehrere Serviceeinrichtungen (21) für die Schweißroboter (3) vorhanden sein. Diese beinhalten die Kalibriervorrichtung (19) für die Schweißzangen (2) und weitere nachstehend nähere beschriebene Komponenten.

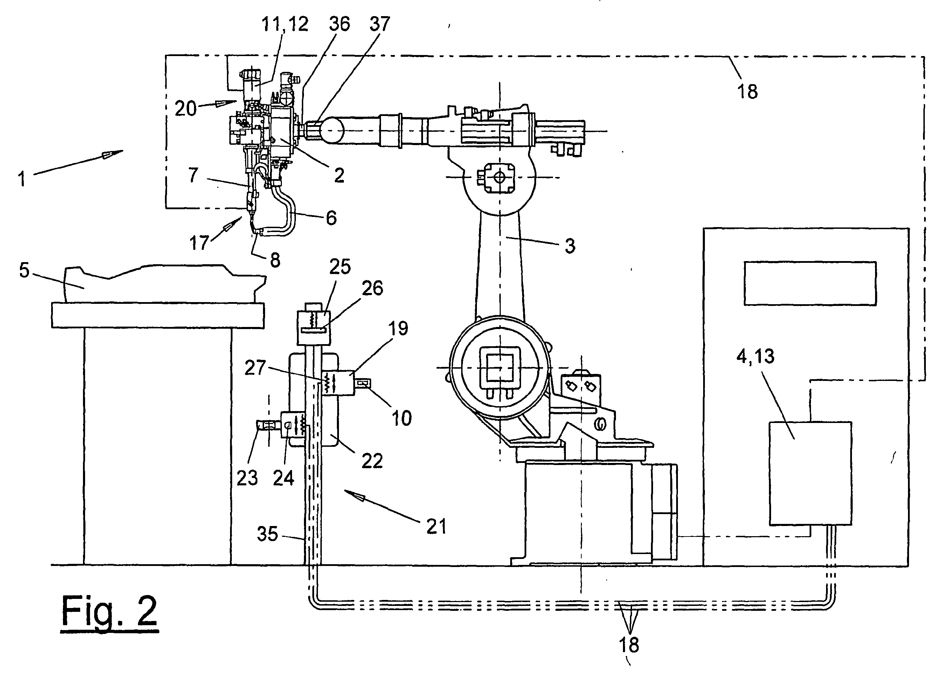

In Figur 2 ist eine Widerstandsschweißeinrichtung (1) schematisch dargestellt. Sie beinhaltet eine bewegte Schweißzange (2), die von einem mehrachsigen Schwenkarm-Roboter (3) mittels einer Robotersteuerung (4) gegenüber einem Werkstück (5) bewegt wird. Anstelle eines Roboters (3) kann auch ein anderer beliebiger ein- oder mehrachsiger Manipulator zum Bewegen und Positionieren der Schweißzange (2) eingesetzt werden.

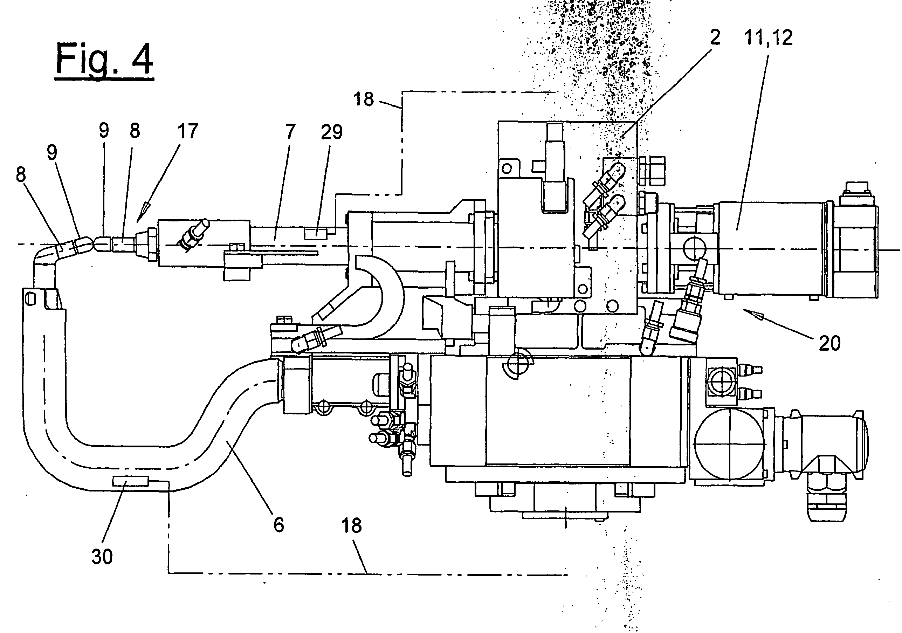

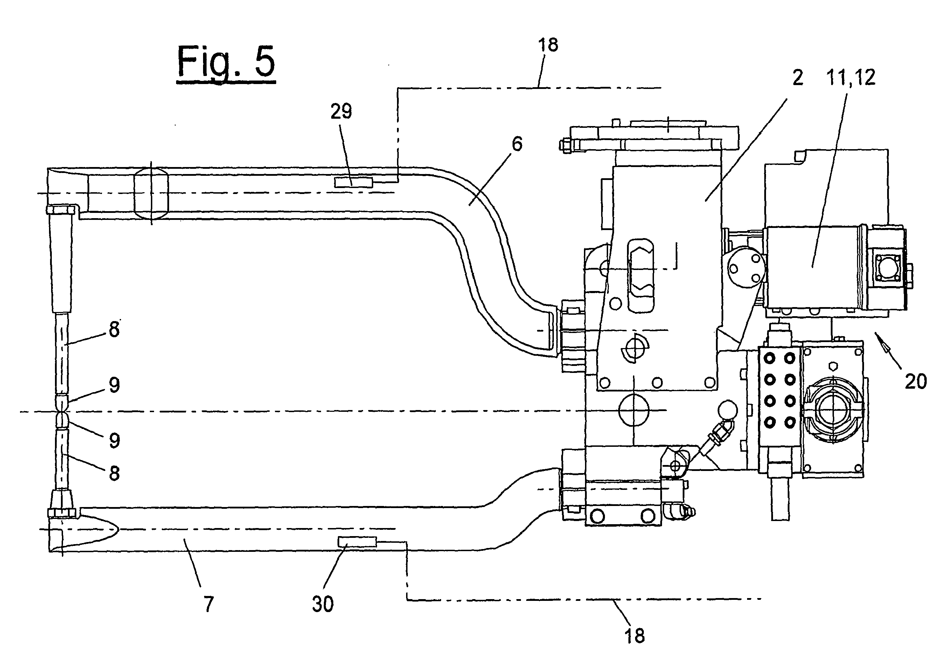

Figur 4 und 5 zeigen zwei unterschiedliche Ausführungsformen einer Schweißzange (2). In Figur 4 ist eine sog. C-Zange und in Figur 5 eine X-Zange dargestellt. In der Ausführungsform der C-Zange von Figur 4 ist der eine Elektroden- oder Zangenarm (6) relativ ortsfest am Zangengehäuse befestigt. Der andere Zangenarm (7) ist relativ zum ersten Zangenarm (6) beweglich, z.B. linear verschieblich gelagert und wird vom Armantrieb (11) beaufschlagt. In der Variante von Figur 5 sind beide Zangenarme (6,7) der X-Zange beweglich und vorzugsweise drehbar am Zangengehäuse gelagert und werden beide vom Armantrieb (11) beaufschlagt. Der eine Zangenarm, üblicherweise der untere Zangenarm (7), kann zumindest temporär relativ ortsfest zum Zangengehäuse bzw. zur Hand des Roboters gespannt werden. In beiden Ausführungsformen ist die Schweißzange (2) über eine geeignete Anschlussplatte an der Hand des Roboters (3) befestigt.

Der Armantrieb (11) besitzt einen geeigneten Motor, vorzugsweise einen Elektromotor und ggf. auch ein Getriebe. Alternativ kann der Armantrieb (11) auch in beliebig anderer Weise ausgebildet sein, z.B. als pneumatischer, hydraulischer, pneumohydraulischer oder sonstiger Antrieb. Der Armantrieb (11) hat ferner eine Positionsmesseinrichtung (12), die in geeigneter Weise ausgebildet und an geeigneter Stelle des Armantriebs (11) angeordnet ist. Sie kann z.B. als Drehgeber ausgebildet sein, der in den Elektromotor (11) integriert oder direkt an der Abtriebswelle angeordnet ist. Die Positionsmesseinrichtung (12) misst vorzugsweise Drehwinkel, kann alternativ aber auch Wege messen.

Zum Widerstandsschweißen wird das Werkstück (5), das z.B. aus zwei oder mehr Blechlagen (14,15) besteht, zwischen den Elektroden (8) bzw. Elektrodenkappen (9) der Zangenarme (6,7) eingespannt. Die beiden Elektroden (8) üben hierbei vorzugsweise eine bestimmte Elektrodenkraft auf das Werkstück (5) aus. Der Schweißvorgang erfolgt durch Aufschalten von Schweißstrom mit geeigneter Höhe und Dauer, wobei der Stromverlauf gegebenenfalls verändert und z.B. mit einem sogenannten Stromprogramm variiert wird. Außerdem kann die Elektrodenkraft sich vor, während und nach dem Schweißvorgang verändern und insbesondere verringern, was nach einem Kraftprogramm ablaufen kann. Diese Veränderungen sind prozeßabhängig und lassen sich mit der gezeigten Widerstandsschweißeinrichtung (1) verwirklichen.

Die Bewegungen der Zangenarme (6,7) und der Armantrieb (11) können wahlweise nach der Kraft oder der Position bzw. dem Weg gesteuert oder geregelt erfolgen.

Bei einer echten Kraftregelung ist die Elektrodenkräft prinzipbedingt unabhängig von der Blechstärke und von den Blechtoleranzen. Für eine Kraftregelung der Schweißzange (2) sind an geeigneter Stelle im Kraftkreis der Schweißzange (2), z.B. an ein oder beiden Zangenarmen (6,7), ein oder mehrere Kraftmesser (29,30) angeordnet. In den gezeigten Ausführungsbeispielen von Figur 4 und 5 befinden sich die Kraftmesser (29,30) mit Distanz zu den Elektroden an den Zangenarmen (6,7) und sind in geeigneter Weise, z.B. als Dehnungsaufnehmer, piezoelektrischer Druckaufnehmer oder dgl. gestaltet. Alternativ kann auch nur ein Kraftmesser (29) vorhanden sein, der vorzugsweise am bewegten Zangenarm (6) angebracht ist. In weiterer Abwandlung können die Kraftmesser (29,30) auch an beliebigen anderen Stellen der Schweißzange (2), z.B. im Armantrieb (11) oder in der Nähe der Elektroden (8) positioniert sein.

Der Armantrieb (11) besitzt eine geeignete rechnergestützte Steuerung (13). Die Steuerung (13) kann als eigenständige Steuerung ausgeführt und der Schweißzange (2) extern zugeordnet oder in diese bzw. den Armantrieb (11) integriert sein. In der bevorzugten Ausführungsform ist die Steuerung (13) mit der Robotersteuerung (4) verbunden und kann insbesondere in diese integriert sein.

Der oder die Kraftmesser (29,30) sind über eine geeignete Leitung (18) mit der Steuerung (13) verbunden. In der Steuerung (13) ist ein analoger oder digitaler Kraftregler integriert.

Bei einer positionsgesteuerten bzw. -geregelten Schweißzange (2) ist die Steuerung (13) über eine Leitung (18) mit der Positionsmesseinrichtung (12), z.B. dem Drehgeber, verbunden. Ein elektromotorischer Armantrieb (11) kann ferner eine integrierte Messeinrichtung (20) für den Motorstrom bzw. das hierdurch repräsentierte Motormoment aufweisen. Diese Messeinrichtung (20) ist ebenfalls über eine Leitung (18) mit der Steuerung (13) verbunden.

Über die Positionssteuerung (13) führen die Zangenarme (6,7) bestimmte translatorische und/oder rotatorische Bewegungen zueinander aus, die über den Verschiebeweg bzw. den Drehwinkel des Antriebs (11) und insbesondere des Elektromotors bestimmt sind und mit der Positionsmesseinrichtung (12) gemessen, angesteuert und kontrolliert werden. Über die Positionsmesseinrichtung (12) und deren Rückmeldungen an die Steuerung (4) ist auch eine Positionsregelung der Zangenarme (6,7) und ihrer Elektroden (8) möglich, indem der Armantrieb (11) einen oder beide Zangenarme (6,7) solange bewegt, bis die von der Steuerung (13) vorgegebene Position erreicht ist.

Durch die Positionssteuerung bzw. Positionsregelung der Zangenarme (6,7) und der Elektroden (8) werden unbekannte und sich verändernde mechanische Faktoren im Antriebsstrang, z.B. Haft- und Gleitreibung, mechanisches Spiel und dergleichen sowie die Federelastizität der Zangenarme (6,7) kompensiert. Derartige Widerstände werden bei Auftreten durch eine höhere Stromaufnahme und ein höheres Drehmoment des Antriebsmotors (11) überwunden.

Bei einer Kraftregelung der Schweißzange (2) werden die Elektrodenarme (6,7) nach dem Werkstückkontakt in Abhängigkeit von der mittels den Kraftmessern (29,30) gemessenen Kraft so aufeinander zu bewegt, dass eine gewünschte Elektrodenkraft an der Schweißstelle entsteht. Die von den Kraftmessern (29,30) ermittelte Kraft ist proportional zu der an der Elektrode (8) des jeweiligen Zangenarms (6,7) entwickelten anteiligen Elektrodenkraft, wobei Federelastizitäten und dergleichen andere im Bereich zwischen Elektrode (8) und Kraftmesser (29,30) einwirkenden äußeren Veränderungsfaktoren beim Proportionalverhältnis berücksichtigt sind. Sie können durch die nachfolgend näher beschriebene Kalibrierung ermittelt werden.

Beim elektrischen Widerstandsschweißen entsteht das Problem, dass für eine gute Schweißqualität beide Elektroden zu Beginn des Schweißprozesses guten Kontakt mit dem Werkstück (5) haben sollen, wobei sich außerdem die Schließkraft des Armantriebs (11) gleichmäßig auf beide Zangenarme (6,7) verteilt, so dass beide Elektroden (8) mit im wesentlichen der gleichen Kraft an das Werkstück (8) gedrückt werden. Wichtig ist vor allem, dass die gewünschte Elektrodenkraft zwischen den zwei oder mehr Blechlagen (14,15) des Werkstücks (5) wirkt. Wenn durch Fehlpositionierungen zwischen Werkstück (5) und Schweißzange (2) nur eine der beiden Elektroden den erforderlichen Kontakt mit dem Werkstück (2) hat, ist die an der Schweißstelle wirkende Elektrodenkraft unzureichend mit der Folge einer mangelhaften Schweißung.

Nachfolgend werden das Kalibrierverfahren und eine zugehörige Kalibriervorrichtung (19) für die Widerstandsschweißeinrichtung (1) bzw. deren Armantrieb (11) beschrieben. Hierbei lassen sich die Kraftregelung und/oder die Positionssteuerung oder -regelung der Schweißzange (2) und andere Dinge kalibrieren.

Die Kalibriervorrichtung (19) besteht aus einem geeigneten Sensor, insbesondere einem Kräftsensor (10), z.B. einem piezo-elektrischen Druckaufnehmer, der zwischen die Spitzen der Elektrodenkappen (9) der schließenden Schweißzange (2) eingespannt werden kann und der die dabei zwischen den Elektrodenkappen (9) auftretende Elektrodenkraft unmittelbar misst. Der Kraftsensor (10) ist vorzugsweise mit einer elektronischen Auswerteeinrichtung kombiniert, welche Kraftsignale über eine Leitung (18) abgeben kann.

Die Kalibriervorrichtung (19) kann Bestandteil einer Serviceeinrichtung (21) sein, die sich im Arbeitsbereich von ein oder mehreren Schweißrobotern (3) befindet. Diese Ausbildung ist vor allem für mobile und vom Roboter (3) geführte Schweißzangen (2) von Vorteil. Für die Kalibrierung stationärer Schweißzangen (2) kann die Kalibriervorrichtung (19) mobil sein und wird vom Roboter (3) zur Schweißzange (2) bewegt.

Die Serviceeinrichtung (21) kann noch weitere Komponenten beinhalten und hat einen vorzugsweise gemeinsamen Ständer (35) oder ein Gestell, an dem diese Teile derart verteilt angeordnet sind, dass sie vom Schweißroboter (3) mit der Schweißzange (2) gut erreicht werden können. Die Serviceeinrichtung (21) kann als zusätzliche Komponente z.B. eine Kappenwechselvorrichtung (22) und eine Kappenfräsvorrichtung (23) besitzen. Die Kappenfräsvorrichtung (23) kann eine integrierte oder externe Kappenkontrollvorrichtung (24) besitzen, mit der das Fräsergebnis der Elektrodenkappe (9) kontrolliert und vermessen wird. Ferner kann die Serviceeinrichtung (21) eine Kalibriervorrichtung (25) für den TCP (tool center point), z.B. die Spitze der Elektrodenkappe (9) am festen Zangenarm (6), der Schweißzange (2) aufweisen. Diese kann z.B. einen Messkontakt (26) mit bekannter absoluter Position aufweisen, der vom Roboter (3) mit der Elektrodenkappe (9) unter Nutzung der nachfolgend beschriebenen Anpassvorrichtung (17) berührt wird, wobei zeitgleich mit der Berührung die Roboterposition gespeichert und aus der Differenz von Soll- und Istposition ein Korrekturfaktor für die TCP-Lage berechnet und in der Robotersteuerung (4) gespeichert wird. Alternativ kann die Kalibriervorrichtung (25) eine optische Vermessungseinheit oder dgl. sein.

Die Kalibriervorrichtung (19), die Kappenfräsvorrichtung (23) und die Kalibriervorrichtung (25) können über eine federnde Lagerung (27) in Anfahrrichtung des Roboters (3) ausweichfähig am Ständer (35) angeordnet sein. Die Kalibriervorrichtungen (19,25) und die Kappenkontrollvorrichtung (24) können über elektrische Leitungen (18) mit der Steuerung (13) und/oder der Robotersteuerung (4) verbunden sein.

In einem ersten Kalibrierschritt wird die Widerstandsschweißeinrichtung (1) bzw. deren Schweißzange (2) mit der Kalibriervorrichtung (19) nach der Elektrodenkraft kalibriert. Schweißzangen (2) benötigen bei der Inbetriebnahme und dann auch später zyklisch in der Produktion Kalibriervorgänge.

Mit der Kalibriervorrichtung (19) können zum einen der oder die Kraftmesser (29,30) kalibriert werden. Hierbei wird z.B. die Schweißzange (2) auf den Kraftsensor (10) geschlossen, der Messsignale abgibt, welche die tatsächlich wirkende Elektrodenkraft repräsentieren. Hierbei speichert z.B. die Steuerung (4,13) bei der positiven Flanke eines ersten Signals $OUT_1$ des Kraftsensors (10) zeitgleich den von dem/den Kraftmesser(n) (29,30) an der Schweißzange (2) kommenden Kraft-Istwert $F_{Ist1}$. Bei der positiven Flanke eines zweiten Signals $OUT_2$ speichert die Steuerung (13) zeitgleich den von dem/den Kraftmesser(n) (29,30) übermittelten Kraft-Istwert $F_{Ist2}$. Dementsprechend kann mit weiteren OUT-Signalen verfahren werden. Die Steuerung (4,13) vergleicht die Messwerte und berechnet anschließend automatisch (Auto-Kalibrierung) eine neue Sensorkennlinie der Kraftmesser (29,30) basierend auf den vom Kalibrersensor (10) bekannten und exakt reproduzierbaren Kraftwerten in den Schaltpunkten ($F_1$ bzw. $F_2$) etc. und den gespeicherten Werten ($F_{Ist1}$ bzw. $F_{Ist2}$) etc., mit der im späteren Schweißbetrieb die Kraftmesswerte des/der Kraftmesser (29,30) oder deren Auswertung berichtigt wird.

Diese Kalibrierung kann während des Anlagenbetriebs mehrfach durchgeführt werden, um im Betrieb auftretende Veränderungen durch mechanischen Verschleiß, thermische Einflüsse, Veränderungen an den Elektrodenkappen (9) und dergleichen zeitnah zu kompensieren. Die Kalibriervorgänge können durch entsprechende Programme in der Robotersteuerung (4) bzw. der Steuerung (13) auch automatisiert werden. Beim Kappenwechsel oder beim Nachfräsen oder sonstigen Verändern der Elektrodenkappen (9) wird die Kalibrierung ebenfalls durchgeführt.

Bei der Kalibrierung einer Positionssteuerung oder -regelung der Schweißzange (2) können bestimmten Positionen des Armantriebs (11), z.B. bestimmten Drehstellungen des Ankers oder der Abtriebswelle, bestimmte Elektrodenkräfte zugeordnet werden. Der Kraftsensor (10) ist dabei konstruktiv so ausgelegt, dass sich seine Dimension und insbesondere seine Dicke $d_{sensor}$ in Richtung der Elektrodenkraft nicht oder nur vernachlässigbar unter Krafteinwirkung ändert. Diese Dimension und Dicke des Sensors ist bekannt.

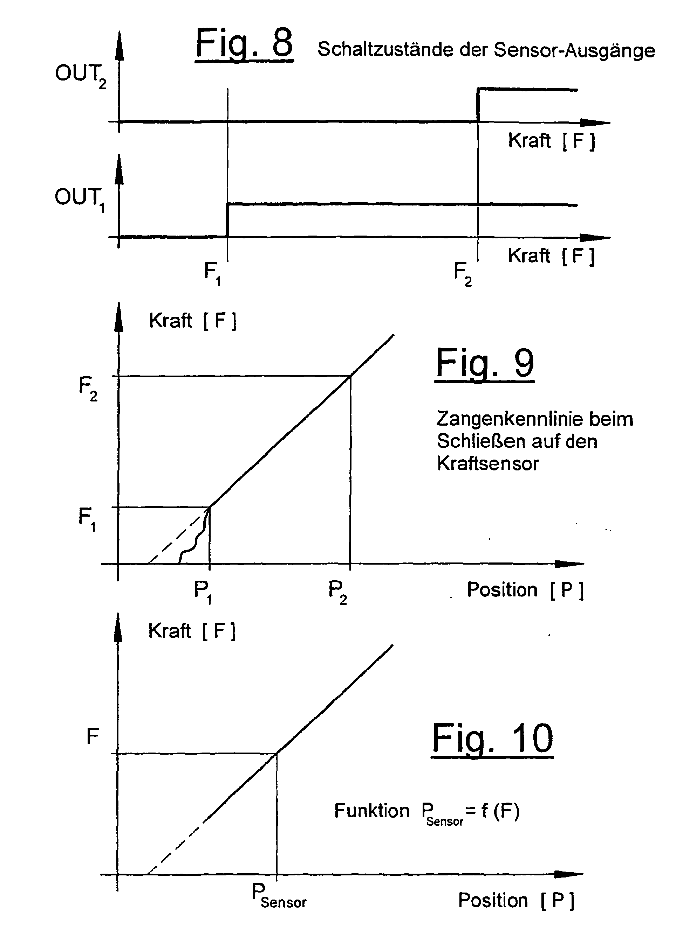

Der Kraftsensor (10) hat vorzugsweise zwei Schaltausgänge $OUT_1$ und $OUT_2$, welche über Leitungen (18) mit der Steuerung (13) des Armantriebs (11) verbunden sind. Die beiden Schaltausgänge $OUT_1$ und $OUT_2$ schalten bei Überschreiten von zwei genau festgelegten Kraftwerten $F_1$ und $F_2$. Der Ausgang $OUT_1$ schaltet bei Überschreiten der Kraft $F_1$ und der Ausgang $OUT_2$ bei Überschreiten der Kraft $F_2$. Figur 8 zeigt im Diagramm diesen Sachverhalt.

Die beiden Ausgänge $OUT_1$ und $OUT_2$ des Kraftsensors (10) sind mit zwei flankengesteuerten Eingängen der Positionssteuerung (13) verbunden und bewirken im Schaltzustand, dass die Steuerung (13) automatisch und zeitgleich die zugehörige aktuelle Position bzw. den Drehwinkel des Antriebsmotors (11) speichert. Es wird also beim Erreichen der Elektrodenkraft $F_1$ die Position $P_1$ und bei Erreichen der Elektrodenkraft $F_2$ die Position $P_2$ gespeichert. Figur 9 verdeutlicht die hierbei sich einstellende Zangenkennlinie beim Schließen der Zangenarme (6,7) und ihrer Elektroden (8) auf den Kraftsensor (10).

Der Antriebsstrang der Schweißzange (2) vom Armantrieb (11) bis zu den Elektroden (8) bzw. Elektrodenkappen (9) stellt ein elastisches System dar, dessen Elastizität von unterschiedlichen Faktoren abhängig ist. Hier spielen zum einen Exemplarstreuungen, Temperatur und Wärmedehnung, Alterung des Materials, aktuelle Länge der Elektrodenkappen (9) (Abnutzung bzw. Verschleiß, Abfräsung etc.), mechanisches Spiel im Getriebe, Lagerungen etc. eine Rolle. Bei geschlossener Schweißzange (2) bewirkt eine Änderung der Motorposition $\Delta P$ eine Änderung der Elektrodenkraft $\Delta F$ nach der Formel: $\Delta F = k*\Delta P$. Dies gilt allerdings in der Regel nach Überschreiten einer gewissen Elektrodenkraft, ab welcher das mechanische Spiel des Zangensystems Null ist.

Ausgehend hiervor ergibt sich beim Schließen der Schweißzange (2) auf den Kraftsensor (10) folgende in Figur 10 dargestellte Positionsfunktion, die für den linearen Bereich des Zangensystems gültig ist, wenn $F \geq F_1$ ist:

$$P_{Sensor}=F*(P_2-P_1)/(F_2-F_1)+(P_1*F_2-P_2*F_1)/(F_2-F_1).$$

Ebenfalls bekannt ist der Übertragungsfaktor i der Schweißzange (2) im geöffneten Zustand. Er ist definiert als $i=\Delta P/\Delta S$ und betrifft die Positionsänderung des Antriebsmotors (11) im Verhältnis zur Änderung der Position der Elektroden (8) bzw. ihrer Elektrodenkappen (9). Die Stärke $d_{Blech}$ des Werkstücks (5) und der zu verschweißenden Blechlagen (14,15) ist ebenfalls für jeden Schweißpunkt bekannt.

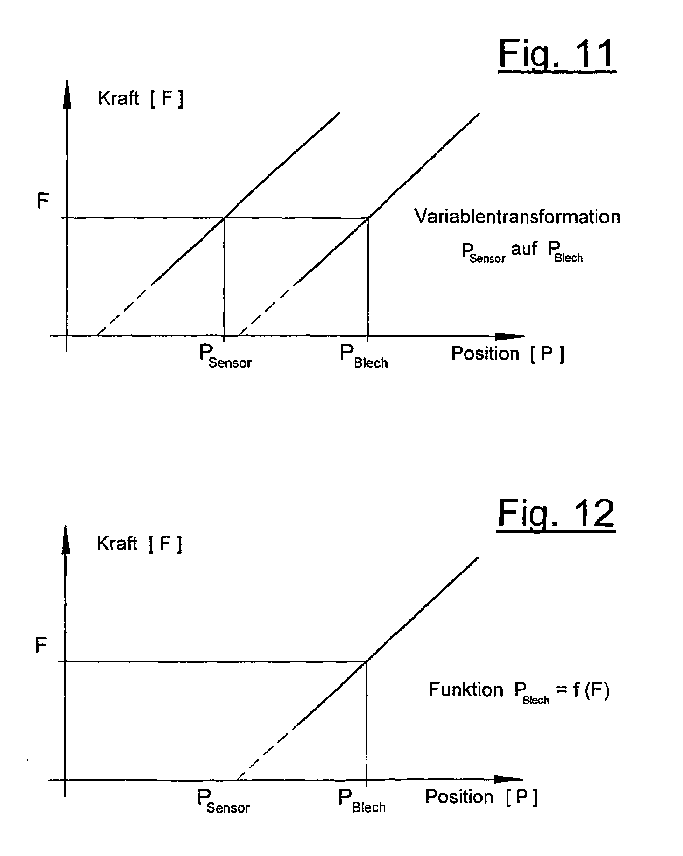

Um beim Schließen der Schweißzange auf die zu verschweißenden Bleche (14,15) die gleiche Elektrodenkraft F wie beim Schließen auf den Kraftsensor (10) zu erreichen, muß der Antriebsmotor (11) weiterdrehen um einen Wert $\Delta P$ entsprechend dem Unterschied zwischen der Stärke $d_{Sensor}$ des Kraftsensors und der Stärke $d_{Blech}$ der zu verschweißenden Bleche (14,15) gemäß der nachfolgenden und in Figur 11 dargestellten Formel bzw. Variablentransformation:

$$P_{Blech}=P_{Sensor}+\Delta P=P_{Sensor}+i*\Delta S=P_{Sensor}+i*(d_{Sensor}-d_{Blech}).$$

Aus den vorigen Gleichungen ergibt sich die Positionsfunktion $P_{Blech} = f(F)$, wie sie in Figur 12 dargestellt ist:

$$P_{Blech}=F*(P_2-P_1)/(F_2-F_1)+(P_1*F_2-P_2*F_1)/(F_2-F_1)+i*(d_{Sensor}-d_{Blech}).$$

Mit folgenden Notierungen kann die vorige Gleichung umgeschrieben werden:

$$a=(P_2-P_1)/(F_2-F_1)$$

$$b=(P_1*F_2-P_2*F_1)/(F_2-F_1)+i*d_{Sensor}.$$

$$P_{Blech}=a*F+b-i*d_{Blech}.$$

Der Faktor a und der Term b werden von der Positionssteuerung (13) des Antriebsmotors (11) nach jeder Kalibrierung automatisch berechnet. Mit folgender Notierung kann die vorige Gleichung nochmals umgeschrieben werden:

$$c=b-i*d_{Blech}$$

$$P_{Blech}=a*F+c$$

Der Term c wird vorzugsweise vor jedem Schweißpunkt automatisch und neu berechnet. Die Positionssteuerung (13) oder die Robotersteuerung (4) verfügt über einen Funktionsgenerator, welche die Funktion $P_{Blech}=f(F)$ während des Schweißbetriebs automatisch berechnet und den Wert $P_{Blech}$ an die Positionssteuerung als Positionssollwert ausgibt.

Der vorgenannte Kalibriervorgang wird bei jedem Wechsel der Schweißzange (2) erneut durchgeführt. Er kann außerdem nach jedem Fräsen der Elektrodenkappen (9) wiederholt werden. Zur besseren Kompensation von wärmebedingten Elastizitätsänderungen kann der Kalibriervorgang auch zu ein oder mehreren verschiedenen Zeitpunkten während des Schweißbetriebs wiederholt werden. Ein Austausch der Elektroden (8) oder die Neubestückung mit Elektrodenkappen führt ebenfalls zu einem erneuten Kalibriervorgang.

Die Kalibrierung kann zusätzlich oder alternativ auch einen anderen Kalibriervorgang beinhalten, mit dem der Elektrodenverschleiß kompensiert wird. Dieser Kalibriervorgang wird zunächst bei neuen und unbenutzten Elektroden (8) und Elektrodenkappen (9) durchgeführt. Hierbei wird die Schweißzange (2) mit einer vorgewählten Geschwindigkeit geschlossen, wobei die Elektroden (8) bzw. ihre Elektrodenkappen (9) einander direkt berühren. Im Moment der Kappenberührung steigt der Motorstrom, was durch die Messeinrichtung (20) ermittelt wird. Die Steuerung (13) triggert auf diesen Stromanstieg, wobei zugleich von der Positionsmesseinrichtung (12) die zugehörige Position des Armantriebs (11) gemeldet und gespeichert wird. Durch Positionsvergleich erhält man hieraus den zum Schließen der Schweißzange (2) bei neuen Elektrodenkappen erforderlichen Weg ohne Werkstück (5) bzw. Bleche (14,15). Alternativ kann die Messung auch über den/die Kraftmesser (29,30) und den ermittelten Kraftanstieg durchgeführt werden.

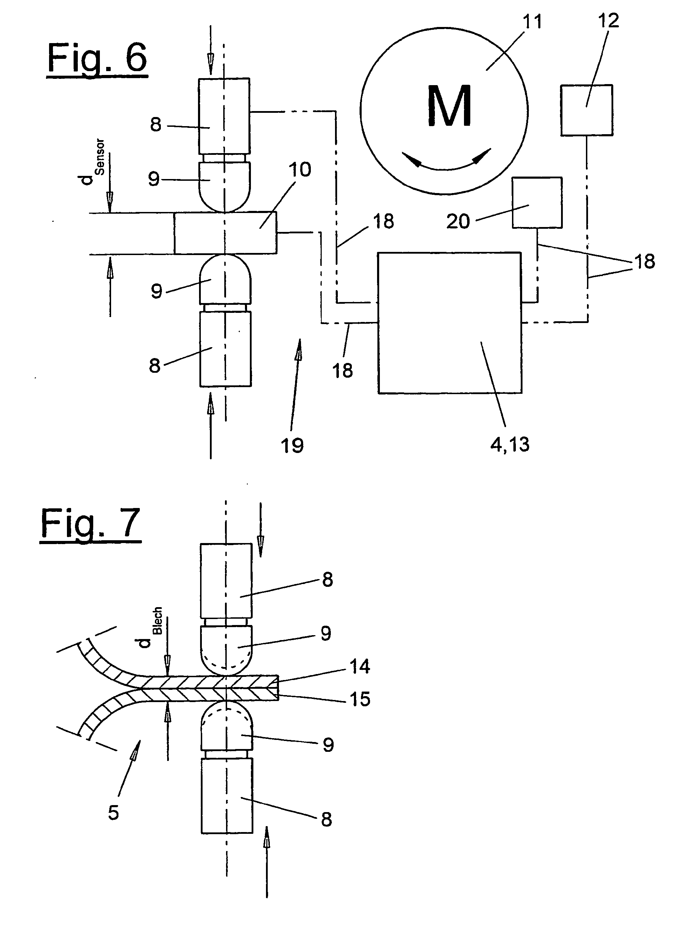

Dieser Kalibriervorgang wird während des Schweißbetriebs und bei Auftreten von Kappenverschleiß und/oder nach einem Fräsen der Elektrodenkappen (9) wiederholt. Durch Verschleiß oder Fräsen verkürzen sich die Elektrodenkappen (9), was in Figur 7 gestrichelt dargestellt ist. Dementsprechend vergrößert sich beim Kalibrieren der Schließweg der Schweißzange (2). Diese Änderung wird als Korrekturwert in die Positionssteuerung (13) entsprechend der vorstehend zu Figur 11 beschriebenen Variablentransformation eingebracht. Die Positionssteuerung (13) kompensiert dann im Schweißbetrieb automatisch die Kappenänderungen, so dass die Zuordnung von Position und Elektrodenkraft stimmt.

Das eingangs erwähnte Anpassverfahren und die Anpassvorrichtung (17) dienen dazu, eine schweißgerechte Relativposition von Schweißzange (2) und Werkstück (5) zu ermitteln und einzunehmen sowie den Positionierhub anzupassen. Hierbei wird diese Relativposition durch eine Roboterbewegung oder durch eine Schließbewegung der positionierten Schweißzange (2) gesucht und mittels eines vorzugsweise berührenden Elektrodenkontakts oder eines gemessenen Elektrodenabstands festgestellt.

In der einen Variante kann mit der vom Roboter (3) geführten offenen Schweißzange (2) durch eine Roboterbewegung die Position des hierzu relativ ortsfesten Werkstücks (5) gesucht und über die Ermittlung eines Berührungskontakts oder eines Abstands festgestellt werden. In der zweiten Variante ist die Kinematik umgekehrt, wobei mit dem vom Roboter (3) bewegten Werkstück (5) die relativ ortsfeste offene Schweißzange (2) gesucht wird. In der dritten Variante des Suchens per Schließbewegung der relativ ortsfest positionierten Schweißzange (2) gegenüber dem Werkstück (5) können wahlweise die Schweißzange (2) oder das Werkstück (5) oder beide von einem Roboter (3) geführt werden. Die Suchstrategie läuft in allen Fällen sinnvoller Weise in der Robotersteuerung (4) ab.

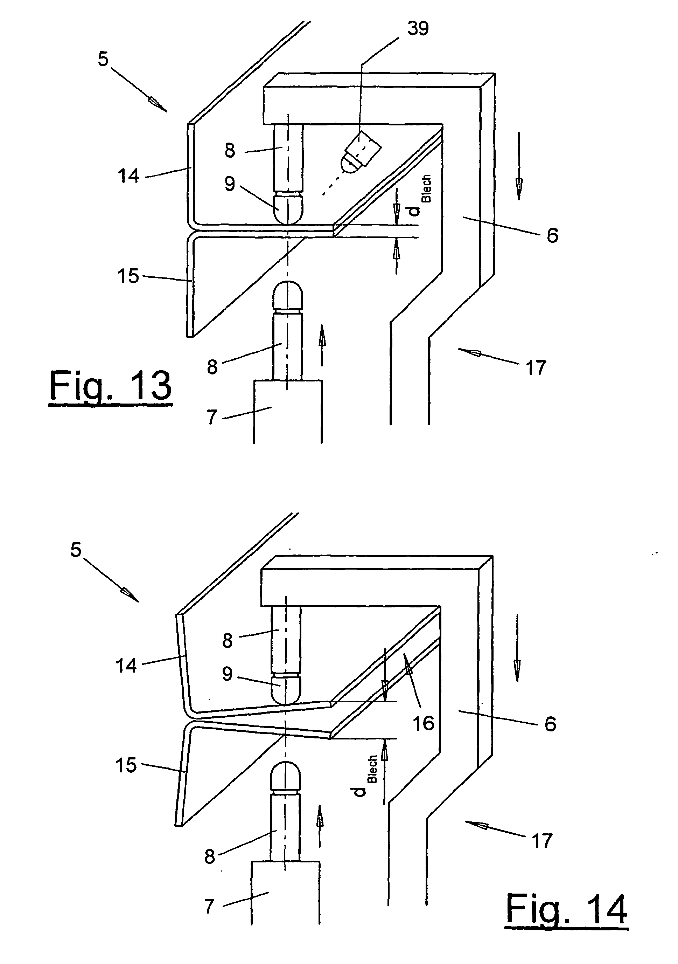

Außerdem kann mit der Anpassvorrichtung (17) auch die Schweißzange (2) nach den Abmessungen des Werkstücks (5) kalibriert werden. Wie Figur 13 und 14 verdeutlichen, können z.B. die beiden Blechlagen (14,15) an der Schweißstelle plan aufeinander liegen oder unter Bildung eines Spaltes (16) aufklaffen. Dementsprechend ergibt sich eine vermeintlich unterschiedliche Blechdicke $d_{Blech}$, die in der Positionssteuerung (13) zu berücksichtigen ist.

Zur Durchführung dieses Anpassverfahrens hat die Schweißeinrichtung (1) eine in unterschiedlicher Weise ausgestaltbare Anpassvorrichtung (17), mit der ein Kontakt oder ein Abstand zwischen der Elektrode (8) bzw. der Elektrodenkappen (9) und dem Werkstück (5) detektiert wird. Die Anpassvorrichtung (17) ist hierzu über eine Leitung (18) mit der Robotersteuerung (4) verbunden.

Durch die Anpassvorrichtung (17) kann auf die bisher erforderlichen Zangenausgleichssysteme verzichtet werden. Die Schweißzange (2) ist dann vorzugsweise mechanisch starr mit dem dem Handflansch (37) des Roboters (3) verbunden, wobei auch der feststehende Elektrodenarm (6) und die dazu gehörige Elektrode (8) relativ zum Handflansch (37) fest sind.

Wenn der Suchvorgang vom Roboter (3) über Berührungskontakt und durch eine Verfahrbewegung der Schweißzange (2) durchgeführt wird, stoppt der Roboter (3) sofort nach dem Kontakt, wobei er wegen der Trägheit über den Kontaktpunkt etwas hinaus fährt. Der Roboter fährt dann zurück auf den gespeicherten Kontaktpunkt, wobei anschließend oder gleichzeitig die Schweißzange (2) zum Schweißen geschlossen werden kann. Entsprechendes gilt bei kinematischer Umkehr, wobei der Roboter (3) das Werkstück (5) relativ zur Schweißzange (2) bewegt. Bei einer Suche über die alternative Abstandsmessung kann die gesuchte Relativposition bevorzugt berührungsfrei und ohne eine Kollisionsgefahr von Elektrode (8) und Werkstück (5) ermittelt werden. Wenn der Suchvorgang durch eine Schließbewegung der Schweißzange (2) durchgeführt wird, werden aus der anfänglichen Elektrodenposition und dem zurückgelegten Elektrodenweg unter Berücksichtigung der Blechdicke Korrekturwerte zur anschließenden Berichtigung und Nachführung der Position des Roboter (3) und der mitgeführten Schweißzange (2) oder des mitgeführten Werkstück (5) gewonnen. Auch hier kann alternativ zur Werkstückberührung mit einer berührungslosen Abstandsmessung gearbeitet werden.

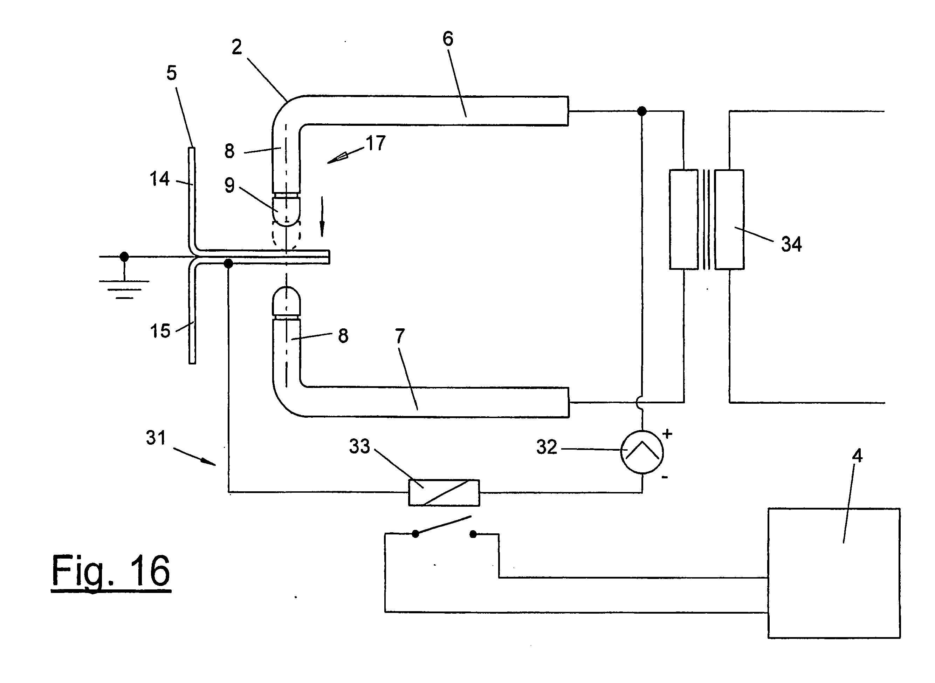

In der bevorzugten und in Figur 16 dargestellten Ausführungsform ist die Anpassvorrichtung (17) als eine mit der Robotersteuerung (4) verbundene elektrische Kontaktsensorik (31) ausgebildet. Sie kann bei beiden Sucharten mit Verfahrbewegung des Roboters (3) bzw. Schließbewegung der Schweißzange (2) eingesetzt werden. Die Anpassvorrichtung (17) besteht aus mindestens einem elektrischen Schaltkreis mit einer Spannungsquelle (32) und einem elektrischen Schalter (33), z.B. einem Relais, welcher vorzugsweise an den festen elektrisch isolierten Zangenarm (6) und an das vorzugsweise geerdete Werkstück (5) angeschlossen ist. Ein zweiter entsprechender Schaltkreis (nicht dargestellt) kann an den anderen beweglichen Zangenarm (7) angeschlossen sein. Die Schweißzange (2) ist zur Isolierung galvanisch vom Roboter (3) getrennt. Figur 16 zeigt ferner schematisch einen Teil der Schweißstromversorgung mit einem z.B. niederohmigen Transformator (34).

Beim Suchen ist die Schweißzange (2) geöffnet oder nur teilweise geschlossen, so dass keine der Elektroden (8) anfangs Kontakt mit dem Werkstück (5) hat. Der Schaltkreis ist durch den Abstand zwischen Elektroden (8) und Werkstück (5) zunächst offen. Bei dem gestrichelt dargestellten Berührungskontakt der festen Elektrode (8) wird der Schaltkreis geschlossen und die angelegte Spannung lässt einen Strom fließen, welcher das Relais (33) schaltet. Das Relais (33) schaltet einen Steuerkreis in der Robotersteuerung (4), der dort eine sofortige Speicherung der zugehörigen Position der kontaktierenden Elektrode (8) bzw. der Achsenstellung und der Position des Roboters (3) bewirkt.

In Abwandlung des vorigen Beispiels kann die Elektrode (8) am beweglichen Zangenarm (7) bei einer Schließbewegung der vorpositionierten Schweißzange (2) zum Werkstück (5) verfahren werden. Die durch den vorgenannten zweiten Schaltkreis in Verbindung mit der Steuerung (4,13) und die Positionsmesseinrichtung (12) ermittelte Position des Kontaktpunktes wird gespeichert. Aus diesem Wert wird unter Berücksichtigung der Ausgangsposition beider Elektroden (8) und der vorgegebenen Blechdicke die Anfahrposition der feststehenden Elektrode (8) berechnet, die der Roboter (3) anschließend anfährt, wobei nachher oder gleichzeitig die Schweißzange (2) zum Schweißen geschlossen werden kann.

Alternativen für das mit Berührung suchende Anpassverfahren und die Anpassvorrichtung (17) sind in verschiedener Weise möglich.

Zum einen können für die Ermittlung der tatsächlichen Werkstückposition und die Feststellung des Blechkontakts der Motorstrom und/oder die Motordrehzahl und/oder die Motorposition eines vorzugsweise elektrischen Armantriebs (11) oder der Roboterantriebe in Verbindung mit der Robotersteuerung (4) aufgenommen, gespeichert und mit einer Vergleichsschaltung ausgewertet werden. Bei Blechkontakt steigt der Motorstrom bzw. sinkt die Motordrehzahl. Eine ähnliche Auswertung von Änderungen des Antriebsverhaltens ist auch mit anderen Arten von Armantrieben (11) möglich. Aus der Motorposition des Armantriebs (11), die anhand der vorbeschriebenen Positionsmesseinrichtung (12) ermittelt wird, kann der Schließweg des oder der Zangenarme (6,7) bis zum Blechkontakt berechnet und als Korrekturwert für die Roboterposition an die Robotersteuerung (4) übermittelt werden.

Bei einer anderen Variante der Anpassvorrichtung (17) werden die beiden Kraftmesser (29,30) der Schweißzange (2) für die Kontakt- und Positionssuche herangezogen. Hierbei werden die Kraftistwerte der beiden in Brückenschaltung betriebenen Kraftmesser (29,30) in der Robotersteuerung (4) aufgenommen, gespeichert und mit einer Vergleichsschaltung ausgewertet. Die Schweißzange (2) schließt hierbei mit kleiner Elektrodenkraft. Der feste Zangenarm (6) hat dabei in der Regel noch keinen Blechkontakt, so dass sein Kraftmesser (29) einen kleineren Wert als der andere Kraftmesser (30) bei Blechkontakt des beweglichen Zangenarms (7) anzeigt. Der Roboter verfährt dann die Schweißzange (2) derart, dass der feste Zangenarm (6) in Blechkontakt gebracht wird und beide Kraftmesser (29,30) gleiche oder in einem anderen gewünschten Relativverhältnis stehende Elektrodenkräfte signalisieren. In dieser Position stoppt der Roboter (3) und die Schweißzange baut die endgültige Elektrodenkraft zum Schweißen auf.

In einer weiteren Variante kommt ein mehrachsig messender Kraftsensor, insbesondere eine elektrische Wägezelle (36) als stabiler Zwischenflansch zwischen Schweißzange (2) und Handflansch (37) des Roboters (3) zum Einsatz. Figur 2 verdeutlicht schematisch diese Anordnung. Die Wägezelle (36) misst die Rückwirkung der Kräfte von der Schweißzange (2) auf den Roboter (3). Der Messwert des Sensors (36) wird zunächst am programmierten Startpunkt gespeichert. Er repräsentiert das bloße Zangengewicht. Die Schweißzange (2) schließt dann mit kleiner Elektrodenkraft. Bei einer Fehlposition der Schweißzange (2) verändert sich der Messwert durch den voreilenden Blechkontakt des beweglichen Zangenarms (7) und die sich hierdurch aufbauende Reaktionskraft. Der Roboter (3) verfährt dann die Schweißzange (2) derart, dass der Messwert des Sensors (36) eine beliebig gewünschte Größe einnimmt. Vorzugsweise soll er wieder mit dem Ursprungswert am Startpunkt übereinstimmen, so dass die Schweißzange (2) reaktionskräftefrei zum Werkstück (5) positioniert ist. In dieser Position stoppt der Roboter (3) und die Schweißzange (2) baut die endgültige Elektrodenkraft zum Schweißen auf.

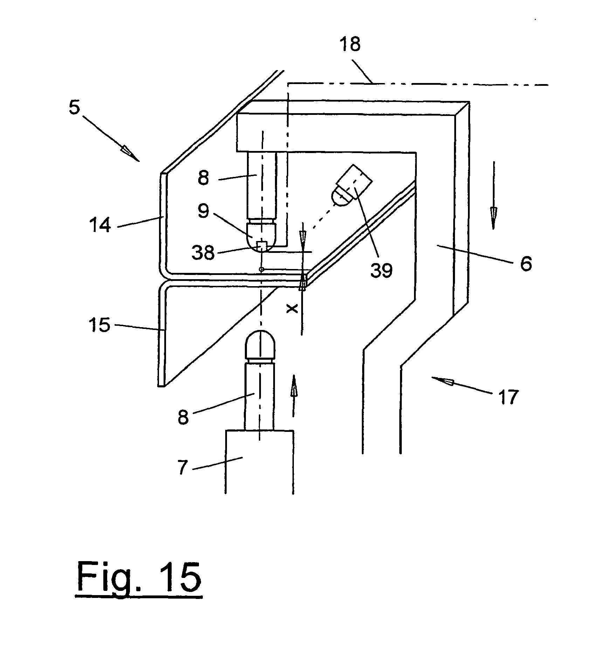

Bei der weiteren Variante einer Suche mit Abstandsmessung gemäß Figur 15 wird die geöffnete Schweißzange (2) mit der suchenden Elektrode (8) bzw. Elektrodenkappe (9), vorzugsweise mit dem TCP, welche wiederum vorzugsweise am festen Zangenarm (6) angeordnet ist, vom Roboter (3) in eine vorprogrammierte kollisionsfreie Suchposition zum Werkstück (5) gefahren. Aus dieser Position wird der Abstand x eines relevanten Elektrodenpunktes, vorzugsweise der Spitze (TCP) der Elektrodenkappe (9), zum Werkstück (5) durch eine beliebig geeignete Abstandssensorik (38) vorzugsweise berührungslos gemessen. Die Abstandssensorik (38) kann z.B. ein kapazitiver oder induktiver Abstandssensor sein. Der Abstand kann ferner durch einen beispielsweise externen optischen Sensor (39) gemessen werden. Die abstandsmessende Sensorik (38,39) ist über eine Leitung (18) mit der Robotersteuerung (4) verbunden, welche aus dem gemessenen Abstand und der bekannten vorprogrammierten Suchposition die Istwerte für die schweißgerechte Relativposition von Werkstück (5) und Schweißzange (2) und vor allem die Istposition des schweißgerechten Kontaktpunktes errechnet, an dem die Elektrode (8) bzw. Elektrodenkappe (9) am Werkstück (5) zum Schweißen anliegen soll. Diese Istposition wird anschließend vom Roboter (3) zielgenau und ohne Trägheits- und Kollisionsprobleme angefahren. Gleichzeitig oder danach schließt die Schweißzange (2) und beginnt die Schweißung.

Die vorbeschriebene Abstandssuche kann alternativ mit kinematischer Umkehr durchgeführt werden, wobei der Roboter (3) das Werkstück (5) relativ zur ortsfesten oder von einem zweiten Roboter gehaltenen Schweißzange (2) bewegt. Beide Varianten der Abstandssuche mit geeigneter Sensorik (38,39) können auch bei der Suche mittels Schließbewegung der Schweißzange (2) eingesetzt werden, wobei die Schweißzange (2) auf eine kollisionsfreie Suchposition schließt.

In einer zusätzlichen Abwandlung kann die vorerwähnte optische Sensorik (39) für die im ersten Ausführungsbeispiel beschriebene Kontaktsuche und zum Feststellen eines Berührungskontaktes von Elektrode (8) bzw. Elektrodenkappe (9) und Werkstück (5) eingesetzt werden. Figur 13 zeigt dies andeutungsweise.

Die Anpassvorrichtung (17) kann gemäß Figur 13 und 14 auch zur Messung der tatsächlichen Dicke $d_{Blech}$ der Blechlagen (14,15) benutzt werden. Nach Speicherung der Roboterposition bei Blechkontakt oder Abstandsmessung der ersten festen Elektrode (8) wird die zweite bewegliche Elektrode (8) unter Schließung der Schweißzange (2) vom Armantrieb (11) in Pfeilrichtung nach oben bewegt. Diese Schließbewegung erfolgt im Momentenmodus bis zur Bauteilberührung. Hierbei kann ein zweiter nicht dargestellter Schaltkreis an den beweglichen Zangenarm (7) angeschlossen sein. Der Kontakt wird in der vorerwähnten Weise über ein Relais festgestellt. Alternativ kann der Kontakt über einen Anstieg des Motorstroms im Armantrieb (11) festgestellt und von der Messeinrichtung (20) ermittelt werden. Hierbei wird gleichzeitig der zugehörige Positionswert des Armantriebs (11) von der Positionsmesseinrichtung (12) ermittelt und gespeichert. Dieser Schließweg wird mit dem zuvor ermittelten Schließweg der Elektroden (8) ohne Bleche verglichen. Die Wegdifferenz repräsentiert die tatsächliche Dicke $d_{Blech}$ der Blechlagen (14,15).

Bei guter Passgenauigkeit der Bleche (14,15) wie in Figur 13 stimmt die gemessene Blechdicke $d_{Blech}$ mit dem vorgegebenen Wert überein. Der eingangs beschriebene erste Kalibrierschritt zur Kompensation der Zangenelastizität bei einer positionsgesteuerten bzw. -geregelten Schweißzange (2), der auf einer Bauteilvorgabe beruhte, kann dann bestehen bleiben. Andernfalls ist bei Abweichungen der tatsächlichen Blechdicke vom Vorgabewert eine entsprechende Korrektur der Positionssteuerung (13) erforderlich.

Bei schlechter Passgenauigkeit der Bleche (14,15) und einem weichen Blechwerkstoff bzw. bei einer weichen Bauteilgeometrie ist eine Abweichung vom theoretischen Wert der Blechdicke gering. Bei steifen Bauteilen und harten Blechwerkstoffen kann die Abweichung aber relativ groß werden. Figur 14 verdeutlicht einen solchen Sachverhalt. Auch in diesem Fall wird der gemessene Blechdickenwert $d_{Blech}$ im Schweißpunkt gemessen und für die eventuelle Korrektur der Positionssteuerung (13) herangezogen. Insbesondere kann hierbei der von der Schweißzange (2) zurückzulegende Weg so weit vergrößert bzw. die anzusteuernde Endposition des Armantriebs (11) so weit verschoben werden, dass der Spalt (16) geschlossen wird und die aufgebogenen Bleche (14,15) in Kontakt gebracht werden. Durch die Positionssteuerung des Armantriebs (11) spielt die Rückstellkraft bzw. Steifigkeit der Aufbiegung und der Bleche (14,15) keine Rolle und braucht auch nicht ermittelt zu werden. Der Armantrieb (11) muß nur stark genug sein, um diesen Widerstand zu überbrücken. Bei einer kraftgeregelten Schweißzange (2) kann das anders sein und Korrekturen erfordern.

Die bei diesem Kalibrierschritt ermittelte Blechdicke $d_{Blech}$ kann auch in der Robotersteuerung (4) und in der Positionierung der Schweißzange (2) durch den Roboter (3) berücksichtigt werden. Hierbei kann z.B. der Roboter (3) die Schweißzange aus der vorbeschriebenen detektierten Position (fester Zangenarm (6)) um die halbe Blechdicke $d_{Blech}$ nachsetzen. Die Positionsermittlung des oberen Bleches (14) erfolgte nämlich auch weitgehend kraftlos, wobei die im tatsächlichen Schweißbetrieb auftretenden Elastizitäten des festen Zangenarms (6) nicht berücksichtigt wurden und nun über das Nachsetzen eingehen. Wird die Schweißzange (2) in der vorbeschriebenen Weise nicht nachgesetzt, kann dies zu Verformungen der Blechlagen (14,15) führen. Dieser Effekt lässt sich allerdings auch positiv ausnutzen, indem solche Verformungen der Blechlagen (14,15) bewusst erzeugt werden.

In weiterer Abwandlung bzw. Verwendung des Anpassverfahrens und der Anpassvorrichtung (17) kann die Schweißzange (2) als Messmaschine betrachtet und benutzt werden, wobei die Messdaten vorzugsweise in der Robotersteuerung (4) über ein geeignetes Analyse- und Datenspeichertool verarbeitet werden. Hierbei werden Kraft und Zangenschließweg erfaßt und der Kraftanstieg über den Weg dokumentiert. Sollte eine schlechte Passung vorliegen, so tritt im Vergleich zum normierten Kraftanstieg, der über eine Kalibrierung zu erfolgen hat, eine Veränderung in der Kurve auf. Der zwischen Kraftanstieg bei Werkstückkontakt (=Schlechte Passung) bis zur Erreichung der Nominalblechdicke zurückgelegte Weg wird abgespeichert und zusammen mit Punktnummer und Koordinaten hinterlegt.

Durch die vorstehend geschilderte Anpasstechnik der Schweißzange (2) sind die tatsächlichen Abmessungen der Blechdicke bzw. des Spaltes (16) bekannt. Auch die Nominaldicke der Bleche (14,15) ist bekannt. Bei einer Ermittlung und Speicherung der Blechdicken- und Spaltmaße an allen Schweißpunkten eines Werkstückes (5) kann durch eine entsprechende Auswertung eine Aussage über die Qualität der zu schweißenden Werkstücke (5) getroffen werden. Hier kann frühzeitig bei beginnenden Abweichungen auf die Vorproduktion der Werkstücke (5) Einfluss genommen werden oder die eigentliche Produktion gestoppt werden. Alternativ kann eine vorzugsweise automatische Schweißfolgeoptimierung und/oder eine Schweißparameteranpassung erfolgen, um die Passungseinflüsse auf die Schweissqualität zu reduzieren. Mit der Aufzeichnung der Schweißmaße ist auch eine statistische Prozesskontrolle möglich, die z.B. für eine Qualitätskontrolle und Qualitätsnachweise, z.B. hinsichtlich Schweißqualität und Bauteilgeometrie, benutzt werden kann. Eine Onlinedokumentation der Messwerte kann ferner zur Passungsdokumentation als Basis für eine Bauteiloptimierung verwendet werden. Wenn im Typenmix unterschiedliche Werkstücke (5) geschweißt werden, kann ferner festgestellt werden, ob das korrekte Werkstück oder überhaupt ein Bauteil zur Schweißung vorhanden ist (z.B. bei unterschiedlichen Materialstärken).

Wenn durch Kraft- und Wegmessung beim Schließen der Schweißzange (2) festgestellt wird, dass die Kraft erhöht werden muss, um die Bleche (14,15) in Schweißposition zu bringen, kann auch die maximal zulässige Zangenkraft überwacht werden. Falls diese überschritten werden müsste, kann durch Änderung anderer Schweißparameter (Strom, Zeit, usw.) eine gute Schweißung erzielt werden, ohne die Schweißzange (2) zu überlasten.

Abwandlungen der dargestellten und beschriebenen Ausführungsbeispiele und der Verfahrensschritte sind in verschiedener Weise möglich. Einzelne Kalibrier- und Anpassvorgänge können ersetzt werden durch die Eingabe von empirisch gewonnenen Korrekturwerten in die Positionssteuerung. Mit diesen Korrekturwerten kann z.B. der Elektrodenkappenverschleiß, eine Elastizitätsänderung durch Temperaturverschiebungen oder auch andere äußere Einflüsse kompensiert werden. Dies ist vor allem dann möglich, wenn diese Einflüsse sich während des Schweißbetriebs im wesentlichen gleichmäßig ändern und sich mit hinreichender Zuverlässigkeit als Erfahrungswerte erfassen lassen. Diese Korrekturwerte können periodisch in einer Stepperfunktion in die Positionssteuerung (13) eingegeben werden. Dies kann in Betriebspausen, alternativ aber auch während des Schweißbetriebs erfolgen. Auf das Kalibrierverfahren und die Kalibriervorrichtung (19) kann ferner verzichtet und statt dessen eine konventionelle Technik eingesetzt werden.

Variabel sind ferner die konstruktiven Ausgestaltungen der Widerstandsschweißeinrichtung (1) und ihrer Bauteile sowie des Roboters (3). Statt einer Schweißzange mit zwei oder mehr Zangenarmen (6,7) kann auch ein Schweißpicker mit nur einem Pickerarm eingesetzt werden, der seine Elektrode gegen einen festen Untergrund oder ein Widerlager drückt. Variabel kann auch die Zangen- oder Klemmengeometrie und -Kinematik sein. Zudem können mehr als zwei Elektrodenarme (6,7) vorhanden sein. Die Elektrode(n) kann/können eine beliebige Form und Ausgestaltung haben. Auf wechselbare Elektrodenkappen (9) kann ggf. verzichtet werden.

BEZUGSZEICHENLISTE

| | |
|---|---|
| 1 | Widerstandsschweißeinrichtung |
| 2 | Schweißzange |
| 3 | Roboter, Schweißroboter |
| 4 | Robotersteuerung |
| 5 | Werkstück, Karosserie |
| 6 | Elektrodenarm, Zangenarm, fest oder bewegt |
| 7 | Elektrodenarm, Zangenarm, bewegt |
| 8 | Elektrode |
| 9 | Elektrodenkappe |
| 10 | Sensor, Kraftsensor |
| 11 | Armantrieb, Elektromotor |
| 12 | Positionsmesseinrichtung, Wegmesser |
| 13 | Steuerung |
| 14 | Blechlage, Flansch |
| 15 | Blechlage, Flansch |
| 16 | Spalt |
| 17 | Anpassvorrichtung |
| 18 | Leitung |
| 19 | Kalibriervorrichtung |
| 20 | Messeinrichtung Motorstrom |
| 21 | Serviceeinrichtung |
| 22 | Kappenwechselvorrichtung |
| 23 | Kappenfräsvorrichtung |
| 24 | Kappenkontrollvorrichtung |
| 25 | Kalibriervorrichtung TCP |
| 26 | Messkontakt |
| 27 | federnde Lagerung |
| 28 | Bearbeitungsstation, Schweißstation |
| 29 | Kraftmesser |
| 30 | Kraftmesser |
| 31 | elektrische Kontaktsensorik |
| 32 | Stromquelle |
| 33 | Schalter, Relais |
| 34 | Transformator |
| 35 | Ständer |
| 36 | Wägezelle, Kraftsensor |
| 37 | Handflansch, Roboterflansch |
| 38 | Abstandssensorik |
| 39 | optischer Sensor |

**Patentansprüche**

**1.** Verfahren zum Steuern, insbesondere Anpassen einer elektrischen Widerstandsschweißeinrichtung (1), bestehend aus einer stationären oder bewegbaren Schweißzange (2) mit ein oder mehreren zumindest teilweise beweglichen Elektrodenarmen (6,7) mit Elektroden (8), einem Armantrieb (11) und einer Steuerung (13), wobei mindestens ein Roboter (3) die Schweißzange (2) und/oder ein Werkstück (5) relativ zueinander bewegt und wobei eine vom Roboter (3) anzusteuernde Relativposition zwischen der Schweißzange (2) und dem Werkstück (5) durch ein Anpassverfahren ermittelt und eingestellt wird, **dadurch gekennzeichnet, dass** im Schweißbetrieb an den Schweißpunkten eine vollautomatische Positionsanpassung durchgeführt wird, wobei die schweißgerechte Relativposition zwischen der Schweißzange (2) und der tatsächlichen Position des zu schweißenden Werkstücks (5) in einer relativen Suchbewegung mit geöffneter Schweißzange (2) vor dem Schweißen ermittelt und eingestellt wird, wobei ein Kontakt oder Abstand zwischen einer Elektrode (8) und dem Werkstück (5) gesucht und festgestellt wird, wobei gleichzeitig zugehörige Positions- oder Kraftmessdaten in der Robotersteuerung (4) aufgenommen und verglichen werden, wonach aus den Vergleichsdaten die korrekte Relativposition in der Robotersteuerung (4) berechnet und zum Schweißen mit einem angepassten Positionierhub angefahren wird.

2. Verfahren nach Anspruch 1, **dadurch gekennzeichnet, dass** die geöffnete Schweißzange (2) mit fest gehaltenem Zangenarm (6) und das Werkstück (5) von mindestens einem Roboter (3) bei der Suchbewegung relativ zueinander bewegt werden, wobei im Kontaktfall die Roboterposition gespeichert und ausgewertet wird.

3. Verfahren nach Anspruch 1, **dadurch gekennzeichnet, dass** die geöffnete Schweißzange (2) und das Werkstück (5) von mindestens einem Roboter (3) relativ zueinander vorpositioniert werden, wobei anschließend die Schweißzange (2) bis zum Kontakt mindestens einer Elektrode (8) mit dem Werkstück (5) geschlossen wird, wobei die Positionsdaten der Zangenbewegung aufgenommen werden, aus denen die korrekte Relativposition bestimmt und vom Roboter (3) angefahren wird.

4. Verfahren nach Anspruch 1, **dadurch gekennzeichnet, dass** die geöffnete Schweißzange (2) und das Werkstück (5) von mindestens einem Roboter (3) relativ zueinander vorpositioniert werden, wobei anschließend die Schweißzange (2) mit verringerter Kraft bis zum Kontakt mindestens einer Elektrode (8) mit dem Werkstück (5) geschlossen wird, wobei mittels Kraftmessern (29,30) an den Zangenarmen (6,7) die entstehenden einzelnen Kräfte in der Robotersteuerung (4) aufgenommen und verglichen werden, wobei der Roboter (3) derart nachgeführt wird, dass die gemessenen Kräfte in einem gewünschten Verhältnis zueinander stehen.

5. Verfahren nach Anspruch 1, **dadurch gekennzeichnet, dass** die geöffnete Schweißzange (2) und das Werkstück (5) von mindestens einem Roboter (3) relativ zueinander vorpositioniert werden, wobei zunächst das Gewicht des bewegten Teils (2,5) mittels eines mehrachsigen Kraftsensors (36), vorzugsweise einer Wägezelle, am Roboterflansch (37) von der Robotersteuerung (4) als Anfangswert aufgenommen und gespeichert wird, wonach die Schweißzange (2) mit verringerter Kraft bis zum Kontakt mindestens einer Elektrode (8) mit dem Werkstück (5) geschlossen wird, wobei die entstehenden vom Kraftsensor (36) gemessenen Reaktionskräfte mit dem Anfangswert verglichen werden und der Roboter (3) derart nachgeführt wird, dass die gemessene Kraft in einem gewünschten Verhältnis zum Anfangswert steht.

6. Verfahren nach Anspruch 1, **dadurch gekennzeichnet, dass** die geöffnete Schweißzange (2) und das Werkstück (5) von mindestens einem Roboter (3) relativ zueinander in einer kollisionsfreien Suchposition vorpositioniert werden, wobei anschließend der Abstand x eines relevanten Elektrodenpunktes, vorzugsweise der Spitze (TCP) der Elektrodenkappe (9), zum Werkstück (5) durch eine mit der Robotersteuerung (4) verbundene Abstandssensorik (38) vorzugsweise berührungslos gemessen wird, wobei die Robotersteuerung (4) aus dem gemessenen Abstand und der bekannten vorprogrammierten Suchposition die Istwerte für die schweißgerechte Relativposition von Werkstück (5) und Schweißzange (2) berechnet und der Roboter (3) entsprechend nachgeführt wird.

7. Verfahren nach Anspruch 1, 2 oder 3, **dadurch gekennzeichnet, dass** der Kontakt mittels einer elektrischen Kontaktsensorik (31) ermittelt wird.

8. Verfahren nach einem der vorhergehenden Ansprüche, **dadurch gekennzeichnet, dass** mit dem Anpassverfahren die Werkstückabmessungen, vorzugsweise die Blechdicke, ermittelt werden, wobei die geöffnete Schweißzange (2) mit einer ersten Elektrode (8) in Kontakt mit einem Werkstück (5) gebracht wird und anschließend die Schweißzange (2) geschlossen und die zweite Elektrode (8) in Kontakt mit dem Werkstück (5) gebracht wird, wobei deren Kontakt detektiert und die zugehörige Positionsänderung des Armantriebs (11) aufgenommen und hieraus die Werkstückabmessungen ermittelt werden.

9. Elektrische Widerstandsschweißeinrichtung (1), bestehend aus einer stationären oder bewegbaren Schweißzange (2) mit ein oder mehreren zumindest teilweise beweglichen Elektrodenarmen (6,7) mit Elektroden (8), einem Armantrieb (11) und einer Steuerung (13) sowie aus einer Anpassvorrichtung (17), die mit einer Robotersteuerung (4) verbindbar ist und die eine Einrichtung zum Detektieren eines Elektrodenkontakts am Werkstück (5) aufweist, wobei die Schweißzange (2) und/oder ein Werkstück (5) von mindestens einem Roboter (3) führbar sind, **dadurch gekennzeichnet, dass** die Anpassvorrichtung (17) eine mit der Robotersteuerung (4) verbindbare elektrische Kontaktsensorik (31) zur Ermittlung eines Kontakts und seiner Position zwischen mindestens einer Elektrode (8) und dem zu schweißenden Werkstück (5) aufweist, wobei die elektrische Kontaktsensorik (31) mindestens einen elektrischen Schaltkreis mit einer Spannungsquelle (32) und einem elektrischen Schalter (33) zur Schaltung eines Steuerkreises in der Robotersteuerung aufweist, wobei der Schaltkreis an eine Elektrode (8) und an das Werkstück (5) angeschlossen ist und wobei die Robotersteuerung (4) zur Ermittlung aus der Kontaktpositionsmessung und zum Anfahren einer schweißgerechten und vom Roboter (3) zum anschließenden Schweißen anzusteuernden Relativposition zwischen der Schweißzange (2) und dem Werkstück (5) ausgelegt ist.

10. Elektrische Widerstandsschweißeinrichtung (1), bestehend aus einer stationären oder bewegbaren Schweißzange (2) mit ein oder mehreren zumindest teilweise beweglichen Elektrodenarmen (6,7) mit Elektroden (8), einem Armantrieb (11) und einer Steuerung (13) sowie aus einer Anpassvorrichtung (17), die mit einer Robotersteuerung (4) verbindbar ist und die eine Einrichtung zum Detektieren eines Elektrodenkontakts am Werkstück (5) aufweist, wobei die Schweißzange (2) und/oder ein Werkstück (5) von mindestens einem Roboter (3) führbar sind, **dadurch gekennzeichnet, dass** die Anpassvorrichtung (17) eine mit der Robotersteuerung (4) verbindbare, externe oder am festen Zangenarm (6) angeordnete Abstandssensorik (38,39) zum berührungslosen Messen eines Abstands zwischen der Elektrode (8) am festen Zangenarm (6) und der tatsächlichen Position des zu schweißenden Werkstücks (5) im Schweißbetrieb aufweist, und wobei die Robotersteuerung (4) zur Ermittlung aus der Abstandsmessung und zum Anfahren einer schweißgerechten und vom Roboter (3) zum anschließenden Schweißen anzusteuernden Relativposition zwischen der Schweißzange (2) und dem Werkstück (5) ausgelegt ist.

11. Elektrische Widerstandsschweißeinrichtung (1), bestehend aus einer bewegbaren und von einem Roboter (3) führbaren Schweißzange (2) mit ein oder mehreren zumindest teilweise beweglichen Elektrodenarmen (6,7) mit Elektroden (8), einem Armantrieb (11) und einer Steuerung (13) sowie aus einer Anpassvorrichtung (17), die mit einer Robotersteuerung (4) verbindbar ist und die eine Einrichtung zum Detektieren eines Elektrodenkontakts am Werkstück (5) aufweist, **dadurch gekennzeichnet, dass** die Anpassvorrichtung (17) einen mit der Robotersteuerung (4) verbindbaren mehrachsigen Kraftsensor (36), vorzugsweise eine Wägezelle, aufweist, der die Rückwirkung der Kräfte von der Schweißzange (2) auf den Roboter (3) misst und der zwischen der Schweißzange (2) und einem Roboterflansch (37) anordenbar ist und wobei die Robotersteuerung (4) zur Ermittlung aus der Kraftmessung und zum Anfahren einer schweißgerechten und vom Roboter (3) zum anschließenden Schweißen anzusteuernden Relativposition zwischen der Schweißzange (2) und dem Werkstück (5) ausgelegt ist.

12. Elektrische Widerstandsschweißeinrichtung (1), bestehend aus einer stationären oder bewegbaren Schweißzange (2) mit ein oder mehreren zumindest teilweise beweglichen Elektrodenarmen (6,7) mit Elektroden (8), einem Armantrieb (11) und einer Steuerung (13) sowie aus einer Anpassvorrichtung (17), die mit einer Robotersteuerung (4) verbindbar ist und die einen Kraftmesser (29,30) zum Detektieren eines Elektrodenkontakts am Werkstück (5) aufweist, wobei die Schweißzange (2) und/oder ein Werkstück (5) von mindestens einem Roboter (3) führbar sind, **dadurch gekennzeichnet, dass** die Anpassvorrichtung (17) zwei an den Zangenarmen (6,7) angeordnete und mit der Robotersteuerung (4) verbundene, in Brückenschaltung betriebene Kraftmesser (29,30) mit einer Vergleichsschaltung zum Vergleich und zur Auswertung der Kraftmesswerte zur Steuerung des Positionierhubs aufweist und wobei die Robotersteuerung (4) zur Ermittlung aus der Kraftmessung und zum Anfahren einer schweißgerechten und vom Roboter (3) zum anschließenden Schweißen anzusteuernden Relativposition zwischen der Schweißzange (2) und dem Werkstück (5) ausgelegt ist.

13. Vorrichtung nach Anspruch 9, 10, 11 oder 12, **dadurch gekennzeichnet, dass** die Anpassvorrichtung (17) eine mit der Robotersteuerung (4,13) verbindbare Messeinrichtung (12,20) für die Position und/oder für die Drehzahl und/oder für den Motorstrom eines vorzugsweise elektromotorischen Armantriebs (11) aufweist.

## Claims

1. Method for the control, in particular adaptation, of an electric resistance welding device (1), consisting of a stationary or moveable electrode holder (2) with one or more at least partially moveable electrode arms (6, 7) having electrodes (8), with an arm drive (11) and with a control (13), at least one robot (3) moving the electrode holder (2) and/or a workpiece (5) in relation to one another, and a relative position, to be headed for by the robot (3), between the electrode holder (2) and the workpiece (5) being determined and set by means of an adaptation method, **characterized in that**, in welding operation, a fully automatic position adaptation is carried out at the welding points, the weld-compatible relative position between the electrode holder (2) and the actual position of the workpiece (5) to be welded being determined and set, before welding, in a relative searching movement, with the electrode holder (2) open, contact or clearance between an electrode (8) and the workpiece (5) being sought and detected, at the same time associated position or force measurement data being recorded and compared in the robot control (4), after which the correct relative position is calculated in the robot control (4) from the comparative data and is approached, for welding, by means of an adaptive positioning stroke.

**2.** Method according to Claim 1, **characterized in that** the open electrode holder (2), with the holder arm (6) firmly held, and the workpiece (5) are moved in relation to one another by at least one robot (3) during the searching movement, in the event of contact the robot position being stored and evaluated.

**3.** Method according to Claim 1, **characterized in that** the open electrode holder (2) and the workpiece (5) are prepositioned in relation to one another by at least one robot (3), subsequently the electrode holder (2) being closed up to the contact of at least one electrode (8) with the workpiece (5), the position data of the holder movement being recorded, from which the correct relative position is determined and approached by the robot (3).

**4.** Method according to Claim 1, **characterized in that** the open electrode holder (2) and the workpiece (5) are prepositioned in relation to one another by at least one robot (3), subsequently the electrode holder (2) being closed with reduced force up to the contact of at least one electrode (8) with the workpiece (5), the individual forces occurring being recorded and compared in the robot control (4) by means of dynamometers (29, 30) on the holder arms (6, 7), the robot (3) being tracked in such a way that the measured forces are in a desired ratio to one another.

**5.** Method according to Claim 1, **characterized in that** the open electrode holder (2) and the workpiece (5) are prepositioned in relation to one another by at least one robot (3), first the weight of the moved part (2, 5) being recorded and stored as an initial value by the robot control (4) by means of a multi-axial force sensor (36), preferably a load cell, after which the electrode holder (2) is closed with reduced force up to the contact of at least one electrode (8) with the workpiece (5), the reaction forces occurring, measured by the force sensor (36), being compared with the initial value, and the robot (3) being tracked in such a way that the measured force is in a desired ratio to the initial value.

**6.** Method according to Claim 1, **characterized in that** the open electrode holder (2) and the workpiece (5) are prepositioned in relation to one another in a collision-free searching position by at least one robot (3), subsequently the clearance x of a relevant electrode point, preferably the tip (TCP) of the electrode cap (9), from the workpiece (5) being measured, preferably contactlessly, by means of a clearance sensor (38) connected to the robot control (4), the robot control (4) calculating, from the measured clearance and the known preprogrammed searching position, the actual values for the weld-compatible relative position of the workpiece (5) and electrode holder (2), and the robot (3) being tracked correspondingly.

**7.** Method according to Claim 1, 2 or 3, **characterized in that** contact is determined by means of an electrical contact sensor (31).

**8.** Method according to one of the preceding claims, **characterized in that** the workpiece dimensions, preferably the sheet metal thickness, are determined by means of the adaptation method, the open electrode holder (2) being brought with a first electrode (8) into contact with a workpiece (5), and subsequently the electrode holder (2) being closed and the second electrode (8) being brought into contact with the workpiece (5), its contact being detected, and the associated position change of the arm drive (11) being recorded and the workpiece dimensions being determined from this.

**9.** Electric resistance welding device (1), consisting of a stationary or moveable electrode holder (2) with one or more at least partially moveable electrode arms (6, 7) having electrodes (8), with an arm drive (11) and with a control (13) and also of an adaptation device (17) which can be connected to a robot control (4) and which has a device for detecting electrode contact on the workpiece (5), the electrode holder (2) and/or a workpiece (5) being guidable by at least one robot (3), **characterized in that** the adaptation device (17) has an electrical contact sensor (31), connectable to the robot control (4), for determining a contact and its position between at least one electrode (8) and the workpiece (5) to be welded, the electrical contact sensor (31) having at least one electrical circuit with a voltage source (32) and with an electrical switch (33) for switching a control circuit in the robot control, the circuit being connected to an electrode (8) and to the workpiece (5), and the robot control (4) being designed for determining from the contact position measurement, and for approaching, a weld-compatible relative position, to be headed for by the robot (3) for subsequent welding, between the electrode holder (2) and the workpiece (5).

**10.** Electric resistance welding device (1), consisting of a stationary or moveable electrode holder (2) with one or more at least partially moveable electrode arms (6, 7) having electrodes (8), with an arm drive (11) and with a control (13) and also of an adaptation device (17) which can be connected to a robot control (4) and which has a device for detecting electrode contact on the workpiece (5), the electrode holder (2) and/or a workpiece (5) being guidable by at least one robot (3), **characterized in that** the adaptation device (17) has a clearance sensor (38, 39), connectable to the robot control (4) and external or arranged on the fixed holder arm (6), for the contactless measurement of a clearance between the electrode (8) on the fixed holder arm (6) and the actual position of the workpiece (5) to be welded, in welding operation, and the robot control (4) being designed for determining from the clearance measurement, and for approaching, a weld-compatible relative position, to be headed for by the robot (3) for subsequent welding, between the electrode holder (2) and the workpiece (5).

11. Electric resistance welding device (1), consisting of a moveable electrode holder (2), guidable by a robot (3), with one or more at least partially moveable electrode arms (6, 7) having electrodes (8), with an arm drive (11) and with a control (13) and also of an adaptation device (17) which can be connected to a robot control (4) and which has a device for detecting electrode contact on the workpiece (5), **characterized in that** the adaptation device (17) has a multi-axial force sensor (36), preferably a load cell, which is connectable to the robot control (4) and which measures the reaction of the forces from the electrode holder (2) to the robot (3) and which can be arranged between the electrode holder (2) and a robot flange (37), and the robot control (4) being designed for determining from the force measurement, and for approaching, a weld-compatible relative position, to be headed for by the robot (3) for subsequent welding, between the electrode holder (2) and the workpiece (5).

12. Electric resistance welding device (1), consisting of a stationary or moveable electrode holder (2) with one or more at least partially moveable electrode arms (6, 7) having electrodes (8), with an arm drive (11) and with a control (13) and also of an adaptation device (17) which is connectable to a robot control (4) and which has a dynamometer (29, 30) for detecting electrode contact on the workpiece (5), the electrode holder (2) and/or a workpiece (5) being guidable by at least one robot (3), **characterized in that** the adaptation device (17) has two dynamometers (29, 30), which are arranged on the holder arms (6, 7) and are connected to the robot control (4) and which are operated in a bridge connection, with a comparative circuit for comparing and for evaluating the force measurement values for controlling the positioning stroke, and the robot control (4) being designed for determining from the force measurement, and for approaching, a weld-compatible relative position, to be headed for by the robot (3) for subsequent welding, between the electrode holder (2) and the workpiece (5).

13. Device according to Claim 9, 10, 11 or 12, **characterized in that** the adaptation device (17) has a measuring device (12, 20), connectable to the robot control (4, 13), for the position and/or for the rotational speed and/or for the motor current of a preferably electromotive arm drive (11).

## Revendications

1. Procédé de commande et en particulier d'adaptation d'un dispositif électrique (1) de soudage résistif, constitué d'une pince de soudage (2) stationnaire ou mobile et doté d'un ou de plusieurs bras d'électrode (6, 7) au moins en partie mobiles et dotés d'électrodes (8), d'un entraînement de bras (11) et d'une commande (13), au moins un robot (3) déplaçant la pince de soudage (2) et/ou une pièce (5) l'une par rapport à l'autre et la position relative à commander par le robot (3) entre la pince de soudage (2) et la pièce (5) étant déterminée et ajustée par un procédé d'adaptation, **caractérisé en ce que** pendant le soudage, une adaptation entièrement automatique de la position est réalisée sur les points de soudage, la position relative de soudage correct entre la pince de soudage (2) et la position effective de la pièce à souder (5) étant déterminées et ajustées avant le soudage dans un déplacement relatif de recherche dans lequel la pince de soudage (2) est ouverte, un contact ou une distance entre une électrode (8) et la pièce (5) étant cherchés et constatés, et en même temps les données associées de position ou de mesure de force sont enregistrées et comparées dans la commande (4) du robot, et à partir des données de comparaison, la position relative correcte est calculée dans la commande (4) du robot et le soudage et commence avec une course de positionnement adaptée.

2. Procédé selon la revendication 1, **caractérisé en ce que** la pince de soudage (2) ouverte dont le bras de pince (6) est immobilisé et la pièce (5) sont déplacées l'une par rapport à l'autre par au moins un robot (3) lors du déplacement de recharge, et en cas de contact, la position du robot est enregistrée et évaluée.

3. Procédé selon la revendication 1, **caractérisé en ce que** la pince de soudage (2) ouverte et la pièce (5) sont prépositionnées l'une par rapport à l'autre par au moins un robot (3), la pince de soudage (2) étant ensuite fermée jusqu'à établir un contact entre au moins une électrode (8) et la pièce (5), les données de position à partir desquelles la position relative correcte est déterminée et de laquelle le robot (3) démarre étant enregistrées.

4. Procédé selon la revendication 1, **caractérisé en ce que** la pince de soudage (2) ouverte et la pièce (5) sont pré-positionnées l'une par rapport à l'autre par au moins un robot (3), la pince de soudage (2) étant ensuite fermée avec une force réduite jusqu'à établir le contact entre au moins une électrode (8) et la pièce (5), des dispositifs (29, 30) de mesure de force prévus sur les bras de pince (6, 7) enregistrant et comparant dans la commande (4) du robot les différentes forces exercées, le robot (3) étant ensuite guidé de telle sorte que les forces mesurées soient placées dans un rapport souhaité.

**5.** Procédé selon la revendication 1, **caractérisé en ce que** la pince de soudage (2) ouverte et la pièce (5) sont pré-positionnées l'une par rapport à l'autre par au moins un robot (3), le poids de la pièce déplacée (2, 5) étant d'abord enregistré et conservé en mémoire par la commande (4) du robot comme valeur initiale au moyen d'un détecteur de force (36) à plusieurs axes, de préférence une cellule de dosage prévue sur le flanc (37) du robot, suite à quoi la pince de soudage (2) est fermée sous une force réduite jusqu'à établir le contact entre au moins une électrode (8) et la pièce (5), les forces de réaction mesurées par le détecteur de force (36) étant comparées avec la valeur initiale et le robot (3) est avancé de telle sorte que la force mesurée soit placée dans un rapport souhaité par rapport à la valeur initiale.

**6.** Procédé selon la revendication 1, **caractérisé en ce que** la pince de soudage (2) ouverte et la pièce (5) sont pré-positionnées l'une par rapport à l'autre dans une position de recherche sans collision par au moins un robot (3), la distance x entre un point pertinent d'électrode, de préférence la pointe (TCP) du bonnet d'électrode (9) par rapport à la pièce (5), étant mesurée de préférence sans contact par une détection de distance (38) associée à la commande (4) du robot, la commande (4) du robot calculant à partir de la distance mesurée et de la position de recherche préprogrammées connues les valeurs effectives de la position relative de soudage correct entre la pièce (5) et la pince de soudage (2), le robot (3) étant avancé de manière appropriée.

**7.** Procédé selon les revendications 1, 2 ou 3, **caractérisé en ce que** le contact est déterminé au moyen d'une détection électrique de contact (31).

**8.** Procédé selon l'une des revendications précédentes, **caractérisé en ce que** lors du procédé d'adaptation, les dimensions de la pièce et de préférence l'épaisseur de la tôle sont déterminées, la pince de soudage (2) ouverte étant amenée avec une première électrode (8) en contact avec une pièce (5) et la pince de soudage (2) étant ensuite fermée, la deuxième électrode (8) étant mise en contact avec la pièce (5), leur contact étant détecté et la modification associée de la position de l'entraînement (11) du bras étant enregistrée, ce qui permet de déterminer les dimensions de la pièce.

**9.** Dispositif électrique (1) de soudage résistif, constitué d'une pince de soudage (2) stationnaire ou mobile qui présente un ou plusieurs bras d'électrode (6, 7) qui peuvent être déplacés au moins en partie et dotés d'électrodes (8), un entraînement de bras (11) et une commande (13) ainsi qu'un dispositif d'adaptation (17) qui peut être relié à une commande (4) de robot et qui présente un dispositif de détection d'un contact entre l'électrode et la pièce (5), la pince de soudage (2) et/ou une pièce (5) pouvant être amenées par au moins un robot (3), **caractérisé en ce que** le dispositif d'adaptation (17) qui présente une détection électrique de contact (31) qui peut être reliée à la commande (4) du robot et qui permet de déterminer un contact et sa position entre au moins une électrode (8) et la pièce (5) à souder, la détection électrique de contact (31) présentant au moins un circuit électrique de commutation doté d'une source de tension (32) et d'un commutateur électrique (33) qui commutent un circuit de commande de la commande du robot, le circuit de commutation étant raccordé à une électrode (8) et à la pièce (5) et la commande (4) du robot étant conçue pour déterminer à partir de la mesure de la position de contact la position de la pince de soudage (2) par rapport à la pièce (5) qui permet le soudage et de la faire prendre par le robot (3) pour permettre ensuite le soudage.

**10.** Dispositif électrique (1) de soudage résistif, constitué d'une pince de soudage (2) stationnaire ou mobile qui présente un ou plusieurs bras d'électrode (6, 7) qui peuvent être déplacés au moins en partie et dotés d'électrodes (8), un entraînement de bras (11) et une commande (13) ainsi qu'un dispositif d'adaptation (17) qui peut être relié à une commande (4) de robot et qui présente un dispositif de détection d'un contact entre l'électrode et la pièce (5), la pince de soudage (2) et/ou une pièce (5) pouvant être amenées par au moins un robot (3), **caractérisé en ce que** le dispositif d'adaptation (17) présente une détection de distance (38, 39) externe ou disposée sur le bras fixe de pince (6) et qui peut être relié à la commande (4) du robot, pour la mesure sans contact de la distance entre l'électrode (8) située sur le bras de pince fixe (6) et la position effective de la pièce (5) à souder, pendant le soudage, la commande (4) du robot étant conçue pour déterminer à partir de la mesure de la distance la position de la pince de soudage (2) par rapport à la pièce (5) qui permet le soudage et de la faire prendre par le robot (3) pour permettre ensuite le soudage.

**11.** Dispositif électrique (1) de soudage résistif, constitué d'une pince de soudage (2) mobile qui peut être déplacée par un robot (3) et qui présente un ou plusieurs bras d'électrode (6, 7) qui peuvent être déplacés au moins en partie et dotés d'électrodes (8), un entraînement de bras (11) et une commande (13) ainsi qu'un dispositif d'adaptation (17) qui peut être relié à une commande (4) du robot et qui présente un dispositif de détection du contact de l'électrode avec la pièce (5), **caractérisé en ce que** le dispositif d'adaptation (17) présente un détecteur de force (36) à plusieurs axes, de préférence une cellule de pesée, qui peut être reliée à la commande (4) du robot et qui mesure la réaction des forces de la pince de soudage (2) sur le robot (3), peut être disposé entre la pince de soudage (2) et la bride (37) du robot, la commande (4) du robot étant conçue pour déterminer à partir de la mesure de force la position de la pince de soudage (2) par rapport à la pièce (5) qui permet le soudage et de la faire prendre par le robot (3) pour permettre ensuite le soudage.

**12.** Dispositif électrique (1) de soudage résistif constitué d'une pince de soudage (2) stationnaire ou mobile qui présente un ou plusieurs bras d'électrode (6, 7) qui peuvent être déplacés au moins en partie et dotés d'électrodes (8), un entraînement de bras (11) et une commande (13) ainsi qu'un dispositif d'adaptation (17) qui peut être relié à une commande (4) de robot et qui présente un dispositif de détection d'un contact entre l'électrode et la pièce (5), la pince de soudage (2) et/ou une pièce (5) pouvant être amenées par au moins un robot (3), **caractérisé en ce que** le dispositif d'adaptation (17) présente deux dispositifs de mesure de force (29, 30) qui fonctionnent dans un circuit en pont, qui sont disposés sur le bras de pince (6, 7), qui sont reliés à la commande (4) du robot et qui présentent un circuit comparateur qui compare et évalue les valeurs de mesure de force pour commander le déplacement de positionnement, la commande (4) du robot étant conçue pour déterminer à partir de la mesure de force la position de la pince de soudage (2) par rapport à la pièce (5) qui permet le soudage et de la faire prendre par le robot (3) pour permettre ensuite le soudage.

**13.** Dispositif selon les revendications 9, 10, 11 ou 12, **caractérisé en ce que** le dispositif d'adaptation (17) présente un dispositif de mesure (12, 20) qui peut être relié à la commande (4, 13) du robot et qui mesure la position et/ou la vitesse de rotation et/ou le courant du moteur de préférence électrique de l'entraînement (11) du bras.

Fig. 1

Fig. 2

Fig. 3

Fig. 4

## Fig. 5

EP 1 414 610 B1

Fig. 6

Fig. 7

24

## Fig. 8  Schaltzustände der Sensor-Ausgänge

OUT₂

Kraft [ F ]

OUT₁

Kraft [ F ]

F₁   F₂

Kraft [ F ]

F₂

F₁

P₁   P₂   Position [ P ]

## Fig. 9

Zangenkennlinie beim
Schließen auf den
Kraftsensor

Kraft [ F ]

F

## Fig. 10

Funktion $P_{Sensor} = f\,(F)$

$P_{Sensor}$   Position [ P ]

## Fig. 11

Kraft [ F ]

F

Variablentransformation
$P_{Sensor}$ auf $P_{Blech}$

$P_{Sensor}$   $P_{Blech}$   Position [ P ]

## Fig. 12

Kraft [ F ]

F

Funktion $P_{Blech} = f(F)$

$P_{Sensor}$   $P_{Blech}$   Position [ P ]

**Fig. 13**

**Fig. 14**

**Fig. 15**

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1005943 A2